(19) Europäisches Patentamt European Patent Office Office européen des brevets

(11) **EP 4 456 018 A1**

(12) **EUROPEAN PATENT APPLICATION**

(43) Date of publication:
**30.10.2024 Bulletin 2024/44**

(21) Application number: **24172421.0**

(22) Date of filing: **25.04.2024**

(51) International Patent Classification (IPC):
**G06V 20/58** (2022.01)      **G06V 10/25** (2022.01)
**G06V 10/82** (2022.01)

(52) Cooperative Patent Classification (CPC):
**G06V 10/25; G06V 10/82; G06V 20/58**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 KR 20230054677**

(71) Applicant: **Thinkware Corporation**
**Seongnam-si, Gyeonggi-do 13493 (KR)**

(72) Inventors:
• **JUNG, Haejun**
  **Seongnam-si, Gyeonggido (KR)**
• **PARK, Yosep**
  **Seongnam-si, Gyeonggido (KR)**

(74) Representative: **BCKIP Part mbB**
**Siegfriedstraße 8**
**80803 München (DE)**

(54) **ELECTRONIC DEVICE FOR IDENTIFYING EXTERNAL OBJECT BASED ON INPUTTING PARTIAL AREA OF IMAGE TO NEURAL NETWORK**

(57)     An electronic device may include a camera and a processor. The processor may be configured to: identify a width of a window to be used to segment the image, based on a field-of-view (FoV) of an image obtained through the camera, identify a height of the window based on a first area including a visual object corresponding to a reference surface, segment the first area to a plurality of partial areas, using the window, based on the width and the height, identify whether an external object is included in the first partial area, from a neural network to which a first partial area among the plurality of partial areas is inputted, and based on a gap identified based on whether the external object is included in the first partial area, obtain a second partial area separated from the first partial area within the image.

FIG. 5B

**Description**

## BACKGROUND

### TECHNICAL FIELD

The present disclosure relates to an electronic device for identifying an external object based on inputting a partial area of an image into a neural network, and a method therefor.

### DESCRIPTION OF RELATED ART

Along with the development of image object recognition technology, various types of services have been emerged. These services may be used for implementing automatic driving, augmented reality, virtual reality, metaverse, or the like and may be provided through electronic devices owned by different users, such as smartphones. The services may be related to hardware and/or software mechanisms that mimic human behavior and/or thinking, such as artificial intelligence. The technology related to artificial intelligence may involve techniques utilizing neural networks that simulate neural networks in living organisms.

### SUMMARY

A scheme for identifying external objects using a neural network may be required.

According to an embodiment, an electronic device may include a camera and a processor. The processor may be configured to, based on a field-of-view (FoV) of an image obtained through the camera, identify a width of a window to be used to segment the image. The processor may identify a height of the window based on a first area including a visual object corresponding to a reference surface. The processor may segment the first area to a plurality of partial areas, using the window, based on the width and the height. The processor may identify, from a neural network to which a first partial area among the plurality of partial areas is inputted, whether an external object is included in the first partial area. The processor may, based on a gap identified based on whether the external object is included in the first partial area, obtain a second partial area separated from the first partial area within the image.

According to an embodiment, an electronic device may include memory and a processor. The processor may be configured to, based on identifying a first vehicle in a first lane among a plurality of lanes which are divided by lines within an image stored in the memory, obtain a first dataset associated with the first vehicle. The processor may, based on identifying a second vehicle in a second lane different from the first lane among the plurality of lanes, obtain a second dataset associated with the second vehicle. The processor may, based on identifying a third vehicle in a third lane different from the first lane and the second lane among the plurality of lanes, obtain a third dataset associated with the third vehicle. The processor may train a neural network using truth data based on each of the first dataset, the second dataset, and the third dataset.

According to an embodiment, a method of an electronic device may comprise identifying a width of a window to be used to segment the image, based on a field-of-view (FoV) of an image obtained through a camera. The method may comprise identifying a height of the window based on a first area including a visual object corresponding to a reference surface. The method may comprise segmenting the first area to a plurality of partial areas, using the window, based on the width and the height. The method may comprise identifying, from a neural network to which a first partial area among the plurality of partial areas is inputted, whether an external object is included in the first partial area. The method may comprise obtaining a second partial area separated from the first partial area within the image, based on a gap identified based on whether the external object is included in the first partial area.

According to various embodiments, the electronic device may identify external objects using a neural network.

### BRIEF DESCRIPTION OF THE DRAWINGS

The above and other aspects, features, and advantages of certain embodiments of the disclosure will be more apparent from the following description, taken in conjunction with the accompanying, in which:

FIG. 1 illustrates an example of a block diagram of an electronic device according to an embodiment;
FIG. 2 illustrates an example of an electronic device for training a neural network, according to an embodiment;
FIG. 3A is an example diagram for describing information identified by an electronic device for training a neural network, according to an embodiment;
FIG. 3B is an example diagram for describing information identified by an electronic device for training a neural network, according to an embodiment;
FIGS. 4A to 4C are diagrams for describing an example of an operation of an electronic device performed to identify a reference surface, according to an embodiment;
FIGS. 5A to 5C are diagrams for describing an operation of an electronic device for identifying an external object, according to an embodiment;
FIG. 5D illustrates an example of an electronic device for identifying an external object, according to an embodiment;
FIGS. 6A to 6C illustrate an example of an operation of an electronic device performed to identify an external object;
FIG. 7 is an example block diagram illustrating an autonomous driving system of a vehicle according to an embodiment;

FIGS. 8 and 9 are example block diagrams illustrating an autonomous driving mobile body according to an embodiment;

FIG. 10 illustrates an example of a gateway related to a user device according to various embodiments;

FIG. 11 illustrates an example of a flowchart of an operation of an electronic device according to an embodiment;

FIG. 12 illustrates an example of a flowchart of an operation of an electronic device according to an embodiment;

FIG. 13 is a diagram for describing an operation of an electronic device for training a neural network based on a training data set; and

FIG. 14 is an example block diagram of an electronic device according to an embodiment.

## DETAILED DESCRIPTION

An electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the present disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the items, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with (to)" or "connected with (to)" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic", "logic block", "part", or "circuit". A module may be a single integral component, or a minimum unit or part thereof, adapted to perform one or more functions. For example, according to an example, the module may be implemented in a form of an application-specific integrated circuit (ASIC).

Various embodiments of the present disclosure as set forth herein may be implemented as software (e.g., a program) including one or more instructions that are stored in a storage medium (e.g., an internal memory or an external memory) that is readable by a machine (e.g., an electronic device 101). For example, a processor (e.g., a processor 120) of the machine (e.g., an electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, various embodiments of the disclosure will be described in detail with reference to the accompanying drawings.

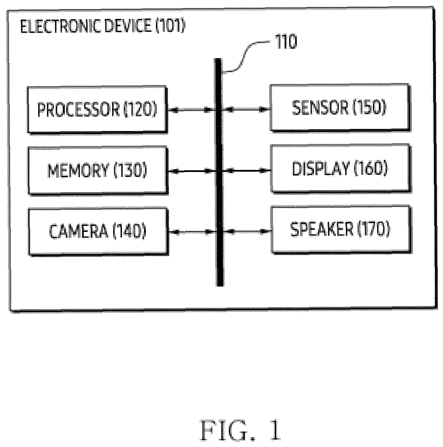

FIG. 1 illustrates an example of a block diagram of an electronic device according to an embodiment.

Referring to FIG. 1, according to an embodiment, the electronic device 101 may include at least one of a processor 120, a memory 130, a camera 140, a sensor 150, a display 160, or a speaker 170. The processor 120, the memory 130, the camera 140, the sensor 150, the display 160, and the speaker 170 may be electrically and/or operably coupled with each other by an electronic component such as a communication bus 110. Hereinafter, when a hardware component is referred to as being operatively coupled with another one, it may mean that a direct connection or an indirect connection between the hardware components is established by wire or wirelessly such that a second hardware is controlled by a first hardware component of the hardware components. Although embodiments are illustrated in different blocks, they are not limited thereto. Some of the hardware components of FIG. 1 may be included in a single integrated circuit such as e.g., a system on chip (SoC). The type and/or number of hardware components included in the electronic device 101 is not limited to that shown in FIG. 1. For example, the electronic device 101 may include only some of the hardware components shown in FIG. 1.

According to an embodiment, the electronic device 101 may include hardware for processing data based on one or more instructions. The hardware for processing data may include the processor 120. For example, the hardware for processing data may include an arithmetic and logic unit (ALU), a floating point unit (FPU), a field programmable gate array (FPGA), a central processing unit (CPU), and/or an application processor (AP). The processor 120 may have a structure of a single-core processor or a structure of a multi-core processor such as a dual-core, a quad-core, a hexa-core, or an octa-core.

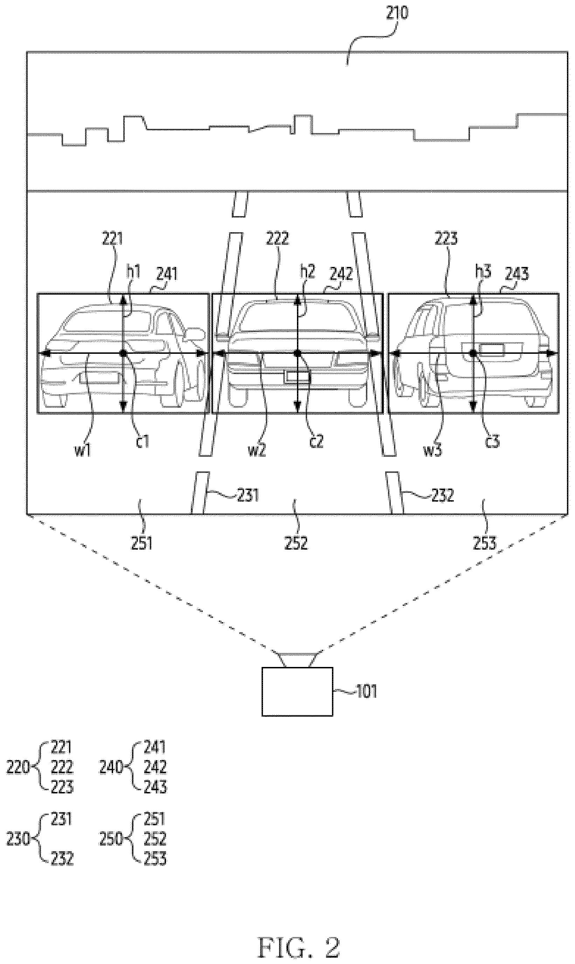

According to an embodiment, the memory 130 of the electronic device 101 may include a hardware component for storing data and/or instructions input and/or output to/from the processor 120 of the electronic device 101. For example, the memory 130 may include a volatile memory such as a random-access memory (RAM) and/or a non-volatile memory such as a read-only memory (ROM). For example, the volatile memory may include at least one of dynamic RAM (DRAM), static RAM (SRAM), cache RAM, and pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), or an embedded multi-media card (eMMC). For example, the memory 130 of the electronic device 101 may include a neural network. The electronic device 101 may identify an external object, based on the neural network stored in the memory 130. For example, the electronic device 101 may train a neural network, based on an image stored in the memory 130. The electronic device 101 may train the neural network, based on the external object identified in the image. For example, the electronic device 101 may train the neural network using an image corresponding to the external object and corresponding to vehicles driving on a road. For example, the road may include traffic lines thereon. For example, the road may include lanes distinguished by the traffic lines. The electronic device 101 may allow the neural network to trained using vehicles identified in each of the lanes. Operations of training the neural network will be described later with reference to FIG. 2.

According to an embodiment, the camera 140 of the electronic device 101 may include a lens assembly or an image sensor. The lens assembly may collect light emitted from a subject for which an image is to be captured. The lens assembly may include one or more lenses. The camera 140 according to an embodiment may include a plurality of lens assemblies. For example, some of the plurality of lens assemblies of the camera 140 may have the same lens attributes (e.g., view angle, focal length, auto focus, f-number, or optical zoom), or at least one lens assembly may have one or more lens attributes different from those of other lens assembly. The lens assembly may include a wide-angle lens or a telephoto lens. According to an embodiment, a flash may include one or more light emitting diodes (LEDs) (e.g., a red-green-blue (RGB) LED, a white LED, an infrared LED, or an ultraviolet LED) or a xenon lamp. For example, the image sensor may obtain an image corresponding to the subject by converting light emitted or reflected from the subject and transmitted through the lens assembly into an electrical signal. According to an embodiment, the image sensor may include, for example, one image sensor selected from image sensors having different attributes, such as an RGB sensor, a black and white (BW) sensor, an IR sensor, or a UV sensor, a plurality of image sensors having the same attributes, or a plurality of image sensors having different attributes. Each image sensor included in the image sensor may be implemented, for example, using a charged coupled device (CCD) sensor or a complementary metal oxide semiconductor (CMOS) sensor.

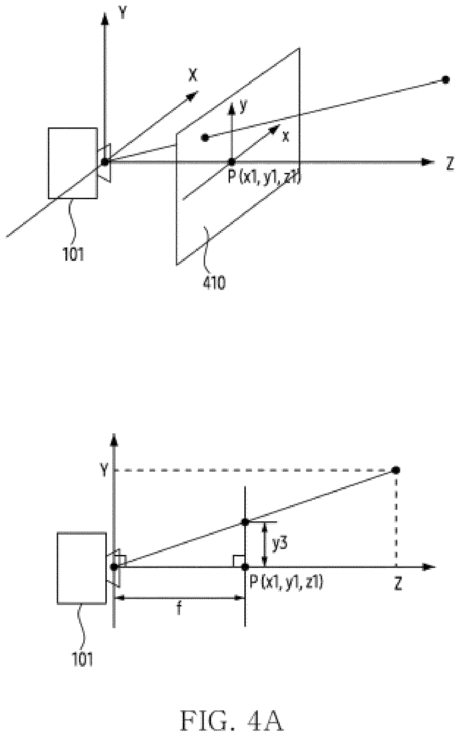

According to an embodiment, the electronic device 101 may obtain an image using the camera 140. The electronic device 101 may identify an external object from the obtained image. The electronic device 101 may identify visual objects in the image. For example, the electronic device 101 may identify an area for identifying an external object, based on identifying a visual object corresponding to a reference surface of the visual objects. For example, the reference surface may include a surface on which the gravity acts in a direction perpendicular to one surface. The electronic device 101 may dividing the area into a plurality of partial areas. For example, the electronic device 101 may identify a width of a window for dividing the area, based on a field of view (FOV) of the camera 140 and/or an image. For example, the electronic device 101 may identify a height of the window, based on the area including the visual object corresponding to the reference surface. The electronic device 101 may segment the area into a plurality of partial areas, based on the width and the height. An operation for identifying the width and/or height of the window will be described later with reference to FIGS. 4A to 4C.

According to an embodiment, the electronic device 101 may identify distortion of an image obtained based on the camera 140. The electronic device 101 may identify an intrinsic parameter of the camera 140. The electronic device 101 may identify the distortion based on identifying the intrinsic parameter of the camera 140. For example, the electronic device 101 may identify a radial distortion and/or a tangential distortion, based on the intrinsic parameter. The electronic device 101 may obtain a second image compensated for the distortion, based on identifying the distortion in the image, which corresponds to a first image. The electronic device 101 may identify an external object, based on the second image. For example, the electronic device 101 may identify the external object using the neural network, based on inputting the second image to the neural network.

According to an embodiment, the sensor 150 of the electronic device 101 may include a sensor for measuring inertia of the electronic device 101, such as an inertial measurement unit (IMU) sensor. For example, the IMU sensor may include a gyro sensor, an acceleration sensor, and/or a 6 degree of freedom (DOF) sensor. However, the disclosure is not limited thereto. The electronic device 101 may identify an angle between the electronic device 101 and a reference surface using the sensor 150. For example, the reference surface may include a surface on which the gravity acts in a direction perpendicular to one surface. According to an embodiment, the electronic device 101 may segment an area for identifying an external object using the reference surface. An operation of dividing the area for identifying an external object using the reference surface will be described later with reference to FIGS. 4A to 4C.

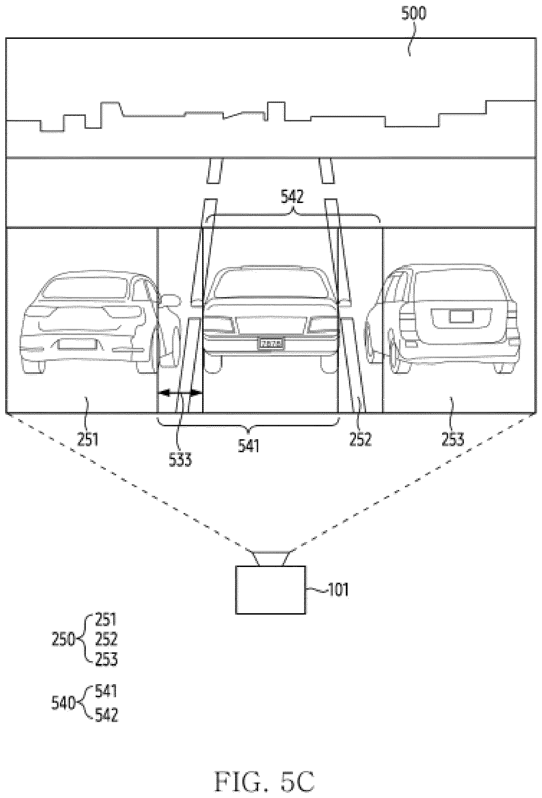

According to an embodiment, the sensor 150 of the electronic device 101 may include a sensor for measuring a speed of the electronic device 101. For example, the sensor for measuring the speed of the electronic device 101 may include a global positioning system (GPS) sensor. For example, the electronic device 101 may identify a velocity and/or a speed of the electronic device 101 based on a change in position of the electronic device 101 obtained based on the GPS sensor. The electronic device 101 may change a gap (or interval) between a plurality of partial areas based on the velocity and/or the speed of the electronic device 101. An operation of adjusting the gap between the partial areas will be described later with reference to FIGS. 5C to 5D.

According to an embodiment, the display 160 of the electronic device 101 may output visualized information to the user. For example, the display 160 may be controlled by the processor 120 including a circuit such as a graphic processing unit (GPU) to output visualized information to the user. The display 160 may include a flat panel display (FPD) and/or electronic paper. The FPD may include a liquid crystal display (LCD), a plasma display panel (PDP), and/or one or more light emitting diodes (LEDs). The LED may include an organic LED (OLED). According to an embodiment, the electronic device 101 may display an image obtained by the camera 140 on the display 160. The electronic device 101 may, based on identifying a specified type of external object identified in the image, display and highlight the specified type of external object. For example, the electronic device 101 may display a visual object corresponding to the external object, as superimposed on the specified type of external object. For example, the electronic device 101 may change the transparency of the visual object, based on changing an alpha value of the visual object. The electronic device 101 may display and highlight the external object by superimposing the visual object, the transparency of which has been changed, on the external object.

According to an embodiment, the speaker 170 of the electronic device 101 may include at least one voice coil for providing vibration to a diaphragm in the speaker 170, and a magnet capable of forming a magnetic field. When a current flows through the at least one voice coil, a magnetic field formed by the voice coil may interact with a magnetic field formed by the magnet to vibrate the voice coil. The diaphragm connected to the voice coil may vibrate based on the vibration of the voice coil. The speaker 170 may output an audio signal based on the vibration of the diaphragm. According to an embodiment, the electronic device 101 may identify an external object in an image obtained through the camera 140. For example, the electronic device 101 may identify a type of the external object. The electronic device 101 may output an audio signal through the speaker 170, based on identifying a specified type of external object. For example, the specified type of external object may include a type of external object that may be hindrance to the movement of the vehicle, such as an obstacle.

According to an embodiment, the electronic device 101 may identify whether an external object is included in a first partial area among the plurality of partial areas. The electronic device 101 may identify the second partial area based on whether an external object is included in the first partial area. For example, the electronic device 101 may identify the second partial area spaced apart from the first partial area by a first gap, based on identifying the external object included in the first partial area. For example, the electronic device 101 may identify the second partial area spaced apart from the first partial area by a second gap, based on identifying that any external object is not included in the first partial area. For example, the first gap may be greater than the second gap. The electronic device 101 may input partial areas spaced apart from each other by the first gap and/or the second gap, to a neural network. The electronic device 101 may identify an external object, based on the neural network to which the partial areas are input.

As described above, according to an embodiment, the electronic device 101 may segment an image based on an FOV of the image obtained through the camera. For example, the electronic device 101 may identify a width of a window to be used for image segmentation, based on the FOV. According to an embodiment, the electronic device 101 may identify a first area including a visual object corresponding to a reference surface (e.g., a ground). The electronic device 101 may identify a height of the window based on identifying the first area. For example, the electronic device 101 may segment the first area into a plurality of partial areas using the window, based on the width and the height of the window. For example, the electronic device 101 may segment the first area into the plurality of partial areas, based on a first gap. The electronic device 101 may input a first partial area among the plurality of partial areas to a neural network. The electronic device 101 may identify whether an external object is included in the first partial area, from the neural network to which the first partial area is input. The electronic device 101 may identify a gap between the partial areas based on whether it is included in the first partial area. The electronic device 101 may obtain the second partial area spaced apart from the first partial area, based on a gap between the plurality of partial areas. For example, the gap may include a first gap and/or a second gap wider than the first gap. The electronic device 101 may identify an external object based on the plurality of partial areas based on the first gap and/or the second gap wider than the first gap, thereby reducing the usage of the processor 120.

FIG. 2 illustrates an example of an electronic device for training a neural network, according to an embodiment. The electronic device 101 of FIG. 2 may include the electronic device 101 of FIG. 1. Operations of FIG. 2 may be performed by the processor 120 of FIG. 1.

According to an embodiment, the electronic device 101 may identify an image stored in a memory (e.g., the memory 130 of FIG. 1). For example, the image may be obtained through a camera (e.g., the camera 140 of FIG. 1) included in the electronic device 101. For example, the image may be transmitted from an external electronic device (e.g., a server). For example, the electronic device 101 may identify a plurality of traffic lanes 250 in the image. For example, the plurality of lanes 250 may be divided by lines 230. The electronic device 101 may train the neural network using truth data based on vehicles identified in each of the plurality of lanes 250.

According to an embodiment, the electronic device 101 may identify a vehicle included in one of the plurality of lanes 250. For example, the electronic device 101 may identify the first vehicle 221 in the first lane 251 identified from the left of the plurality of lanes 250. The electronic device 101 may identify a first bounding box 241 based on identifying the first vehicle 221. The electronic device 101 may identify the shape of the first vehicle 221 based on identifying the first vehicle 221 in the first lane 251. For example, the electronic device 101 may identify a right side and a rear side of the first vehicle 221 in the first bounding box 241. The electronic device 101 may identify the shape of the first vehicle 221 based on identifying the right side and the rear side of the first vehicle 221. The electronic device 101 may obtain a first data set associated with the first vehicle 221, based on identifying the first bounding box 241. The electronic device 101 may train the neural network using truth data based on the first data set. The truth data may be obtained based on the first vehicle 221 and a vehicle license plate identified in the first bounding box 241.

According to an embodiment, the electronic device 101 may identify the license plate including one or more texts in the first bounding box 241. The electronic device 101 may train the neural network using the license plate including the one or more texts. For example, the electronic device 101 may perform labeling of the one or more texts. For example, the labeling may be referred to as data labeling. For example, the electronic device 101 may train the neural network using labeling of the one or more texts.

According to an embodiment, the electronic device 101 may identify a second vehicle 222 in a second lane 252 which is a central lane among the plurality of lanes 250. For example, the second lane 252 may be distinguished from the first lane 251 by a first line 231. The electronic device 101 may identify a second bounding box 242 based on identifying the second vehicle 222. The electronic device 101 may identify the shape of the second vehicle 222 based on identifying the second vehicle 222 in the second lane 252. For example, the electronic device 101 may identify a rear side of the second vehicle 222 in the second bounding box 242. The electronic device 101 may identify the shape of the second vehicle 222 based on identifying the rear side of the second vehicle 222. The electronic device 101 may obtain a second data set associated with the second vehicle 222, based on identifying the second bounding box 242. The electronic device 101 may train the neural network using truth data based on the second data set. The truth data may be obtained based on the second vehicle 222 and the license plate identified in the second bounding box 242.

According to an embodiment, the electronic device 101 may identify the license plate including one or more texts in the second bounding box 242. The electronic device 101 may train the neural network using the license plate including the one or more texts. For example, the electronic device 101 may perform labelling of the one or more texts. The electronic device 101 may train the neural network using labeling of the one or more texts identified in the second bounding box 242.

According to an embodiment, the electronic device 101 may identify a third vehicle 223 in a third lane 253 which is the right lane among the plurality of lanes 250. For example, the third lane 253 may be distinguished from the second lane 252 by the second line 232. The electronic device 101 may identify a third bounding box 243 based on identifying the third vehicle 223. The electronic device 101 may identify the shape of the third vehicle 223 based on identifying the third vehicle 2230 in the third lane 253. For example, the electronic device 101 may identify a left side and a rear side of the third vehicle 223 in the third bounding box 243. The electronic device 101 may identify the shape of the third vehicle 223 based on identifying the left side and the rear side of the third vehicle 223. The electronic device 101 may obtain a third data set associated with the third vehicle 223 based on identifying the third bounding box 243. The electronic device 101 may train the neural network using truth data based on the third data set. The truth data may be obtained based on the third vehicle 223 and the license plate identified in the third bounding box 243.

According to an embodiment, when obtaining the first data set, the second data set, and/or the third data set, the electronic device 101 may generate the same size of each of the bounding boxes 240 for obtaining each of the data sets. For example, the width (w1, w2, w3) of each of the bounding boxes 240 may be 640 pixels. For example, the height (h1, h2, h3) of each of the bounding boxes 240 may be 640 pixels.

For example, the peripheries of each of the bounding boxes 240 may be spaced apart from the center of the vehicle by the same distance. The electronic device 101 may identify the first bounding box 241 having a point C1 corresponding to a center point of the first vehicle 221 in the image as the center. Similarly, a point C2 that is the center of the second bounding box 242 may correspond to a center point of the second vehicle 222 in the image. Similarly, a point C3 that is the center of the third bounding box 243 may correspond to a center point of the third vehicle 223 in the image.

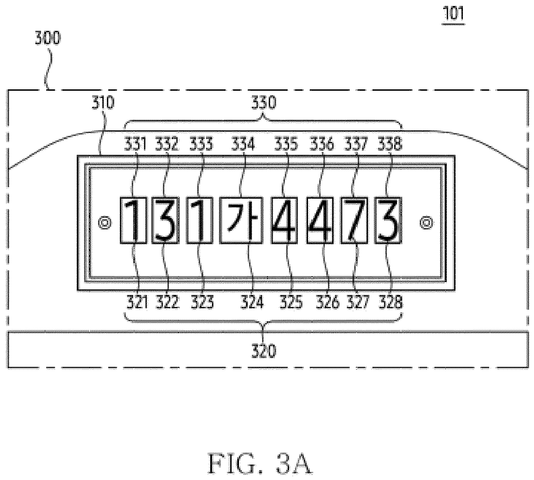

For example, edges of each of the bounding boxes 240 may be formed at a distance spaced apart by 320 pixels from the center of the vehicle. The electronic device 101 may identify each of the license plates in each of the bounding boxes 240. The electronic device 101 may perform labelling of each of the one or more texts identified in the license plate. Operations related to the labeling will be described later with reference to FIG. 3A.

As described above, according to an embodiment, the electronic device 101 may train the neural network using the truth data based on the shape of the vehicle identified in each of the plurality of lanes 250. The electronic device 101 may train the neural network for accurately measuring the location of the vehicle, by training the neural network using the truth data based on the shape of the vehicle identified in each of the plurality of lanes 250. Hereinafter, in FIG. 3A, an operation of labeling of each of one or more texts included in the license plate identified in the bounding box will be described later.

FIG. 3A is an example diagram for describing information identified by an electronic device for training a neural network, according to an embodiment.

The operation of the electronic device 101 described with reference to FIG. 3A may be performed by the electronic device 101 of FIGS. 1 and 2 and/or the processor 120 of FIG. 1.

Referring to FIG. 3A, according to an embodiment, the electronic device 101 may identify a bounding box (e.g., the first bounding box 241, the second bounding box 242, and/or the third bounding box 243 of FIG. 2) corresponding to a vehicle identified in an image 300. The electronic device 101 may identify an area 310 corresponding to the vehicle license plate in the bounding box. The electronic device 101 may identify one or more texts 320 in the area 310. The electronic device 101 may perform labelling of each of the one or more texts 320 based on identifying the one or more texts 320. The labeling may be referred to as data labeling.

For example, the electronic device 101 may identify a first partial area 331 corresponding to a first text 321. The electronic device 101 may label a first tag on the first partial area 331. For example, the electronic device 101 may identify a second partial area 332 corresponding to a second text 322. For example, the electronic device 101 may label a second tag on the second partial area 332. The electronic device 101 may identify a third partial area 333 corresponding to a third text 323. The electronic device 101 may label a third tag on the third partial area 333. For example, the electronic device 101 may identify a fourth partial area 334 corresponding to a fourth text 324. The electronic device 101 may label a fourth tag on the fourth partial area 334. For example, the electronic device 101 may identify a fifth partial area 335 corresponding to a fifth text 325. The electronic device 101 may label a fifth tag on the fifth partial area 335. The electronic device 101 may identify a sixth partial area 336 corresponding to a sixth text 326. The electronic device 101 may label a sixth tag on the sixth partial area 336. For example, the electronic device 101 may identify a seventh partial area 337 corresponding to a seventh text 327. The electronic device 101 may label a seventh tag on the seventh partial area 337. For example, the electronic device 101 may identify an eighth partial area 338 corresponding to an eighth text 328. The electronic device 101 may label an eighth tag on the eighth partial area 338. The one or more texts 320 may include human-readable characters.

According to an embodiment, the electronic device 101 may train the neural network using the partial areas 330 labeled on each of the partial areas 330 corresponding to the one or more texts 320. The electronic device 101 may train the neural network, using the truth data including the partial areas 330.

As described above, according to an embodiment, the electronic device 101 may train the neural network using the partial areas 330 included in the image 300. The electronic device 101 may, when executing the neural network, identify an external object having a specified number of pixels or less within an image, by training the neural network using the partial areas 330.

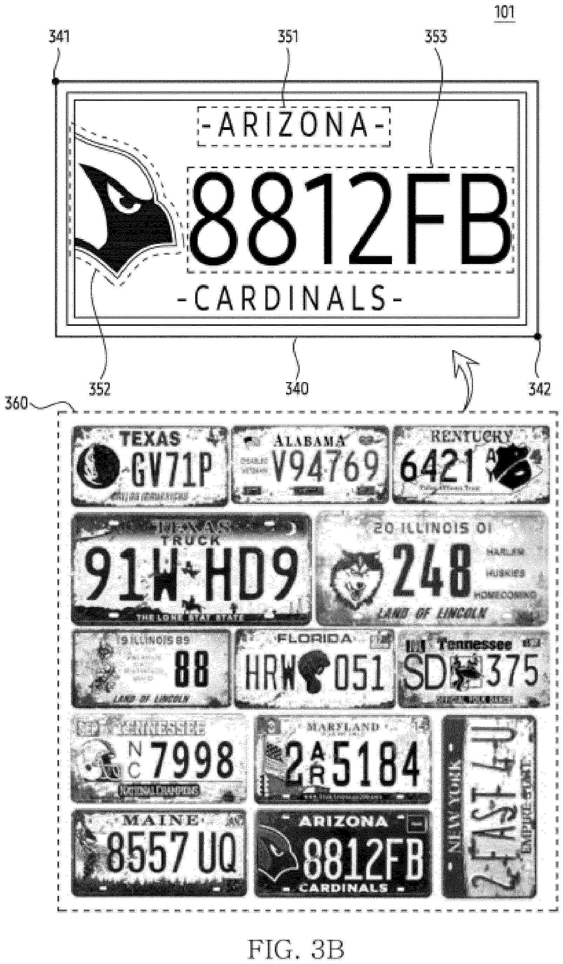

FIG. 3B is an example diagram for describing information identified by an electronic device to train a neural network, according to an embodiment.

An operation of the electronic device 101 as described with reference to FIG. 3B may be performed by the electronic device 101 of FIG. 1, FIG. 2, and/or FIG. 3A, and/or the processor 120 of FIG. 1. Referring to FIG. 3B, the operation of the electronic device 101 related to a bounding box 340 included in a set 360 of bounding boxes for license plates will be described. Embodiments are not limited thereto, and the electronic device 101 may perform similar operations for other bounding boxes included in the set 360.

Referring to FIG. 3B, according to an embodiment, the electronic device 101 may identify a bounding box 340 including a license plate in an image. The electronic device 101 may identify vertices of the bounding box 340. The electronic device 101 may identify a first vertex 341 at the upper-left side of the bounding box 340. The electronic device 101 may identify a first coordinate value in the image of the first vertex 341. The electronic device 101 may identify a second vertex 342 at the lower-right side of the bounding box 340. The electronic device 101 may identify a second coordinate value in the image of the second vertex 342. The electronic device 101 may identify a vehicle type of the visual object including the license plate, based on the first coordinate value and the second coordinate value. For example, the electronic device 101 may identify the vehicle type corresponding to the visual object, based on a position of the license plate in the image. The above-described operation may be performed by the processor of the electronic device 101 while identifying the license plate illustrated in FIG. 3A.

According to an embodiment, the electronic device 101 may identify a license plate using images obtained based on a plurality of cameras. For example, the electronic device 101 may identify the license plate based on images obtained at different angles. For example, the electronic device 101 may identify the license plate based on a projection technique such as, e.g., homography. The electronic device 101 may identify the bounding box 340 including the license plate, based on identifying the license plate by the projection technique.

According to an embodiment, the electronic device 101 may identify the bounding box 340 including the license plate in the image. The electronic device 101 may identify one or more texts (351, 353) and/or a visual object 352 in the bounding box 340. For example, the one or more texts (351, 353) may include a first set of texts 351 for distinguishing regions. For example, the first set of texts 351 may include texts for indicating a registration area of the vehicle to which the license plate is attached. For example, the one or more texts (351, 353) may include a second set of texts 353 including an identification number for distinguishing a vehicle. For example, the second set of texts 353 may include one or more alphabets and/or numerals. However, the disclosure is not limited thereto.

According to an embodiment, the electronic device 101 may identify the font of the first set of texts 351. The electronic device 101 may identify that the first texts 351 indicate a registration area of the vehicle, based on identifying the font of the first texts 351. According to an embodiment, the electronic device 101 may identify the font of the second set of texts 353. The electronic device 101 may identify that the second texts 353 indicate an identification number for distinguishing the vehicle, based on identifying the font of the second texts 353.

According to an embodiment, the electronic device 101 may identify the visual object 352 in the bounding box 340. For example, the visual object 352 may include a visual object for indicating a registration region of the vehicle. For example, the visual object 352 may include a natural object such as e.g., an animal(s) and/or a plant(s). For example, the visual object 352 may include an artificial object such as e.g., a shield and/or a helmet. However, the disclosure is not limited thereto. For example, the visual object 352 may include a combination of an artificial object(s) and a natural object(s).

According to an embodiment, the electronic device 101 may label each of the one or more texts (351, 353) and/or the visual object 352 included in the bounding box 340. For example, the electronic device 101 may label a tag on each of the one or more texts (351, 353). The operation of labeling the tag may be substantially the same as the operations of FIG. 3A. For example, the electronic device 101 may perform such labeling using a neural network model. The neural network model may be referred to as a neural network of FIG. 3A.

According to an embodiment, the electronic device 101 may generate an image including a license plate using a first neural network model. For example, the electronic device 101 may generate images similar to the license plate included in the bounding box 340, based on inputting the bounding box 340 in the image to the first neural network model. For example, the first neural network model may include a neural network model for generating images, such as e.g., conditional generative adversarial nets (CGAN).

According to an embodiment, the electronic device 101 may input images output through the first neural network model to a second neural network model different from the first neural network model. The electronic device 101 may train the second neural network model by inputting the images to the second neural network model. For example, the second neural network model may include a neural network model for identifying a license plate in an image.

As described above, according to an embodiment, the electronic device 101 may train the second neural network model using the images obtained based on the first neural network model. The electronic device 101 may obtain images for training the second neural network model, by obtaining the images based on the first neural network model.

FIGS. 4A to 4C are diagrams for describing an example of an operation of an electronic device 101 performed to identify a reference surface, according to an embodiment. The operation of the electronic device 101 described with reference to FIGS. 4A to 4C may be performed by the electronic device 101 of FIGS. 1, 2, 3A, and/or 3B. The operations of FIGS. 4A to 4C may be performed by the processor 120 of FIG. 1.

Referring to FIG. 4A, according to an embodiment, the electronic device 101 may include a camera (e.g., the camera 140 of FIG. 1) and a sensor (e.g., the sensor 150 of FIG. 1). For example, the electronic device 101 may identify a direction in which the camera faces, using the sensor. For example, in FIG. 4A, the camera of the electronic device 101 may face +z axis direction. For example, the +z-axis direction may be referred to as a first direction. For example, +x-axis direction may be referred to as a second direction. For example, +y-axis direction may be referred toas a third direction. For example, the first direction, the second direction, and the third direction may be perpendicular to each other. The electronic device 101 may identify a reference surface in the image 410 based on a direction of the camera. For example, the electronic device 101 may identify a focal length of the camera. The electronic device 101 may identify a reference point **P** for identifying the reference surface, based on the focal length of the camera. For example, the reference point may be referred to as a vanishing point. The electronic device 101 may identify a height of a window for dividing the image 410, based on the reference point **P.** For example, the electronic device 101 may identify the height of the window, based on the reference point **P** and the height of the image 410. In FIG. 4A, coordinates of the reference point **P** may be (x1, y1, z1). For example, the electronic device 101 may identify the height of the window based on Equation 1 below.

$$h = y1 + y2 * 0.05 \qquad \text{(Equation 1)}$$

In Equation 1 above, **h** may include the height of the window. In Equation 1 above, **y1** may correspond to y coordinates of the reference point. The y coordinates may include y coordinates in a coordinate system in which the vertex at the lower left of the image 410 is formed as an origin. In Equation 1 above, **y2** may include the height of the image 410. In Equation 1 above, 0.05 is a designated value that may be changeable.

According to an embodiment, the electronic device 101 may obtain the height of the image 410 based on the focal length and the reference point **P.** For example, the electronic device 101 may identify the height of the image 410 based on Equation 2 below.

$$y3 = f*(y1/z1) \qquad \text{(Equation 2)}$$

In Equation 2 above, **y3** may include a half of the height of the image 410. In Equation 2 above, **f** may include the focal length of the camera. In Equation 2 above, **y1** may correspond to y coordinates of the reference point **P.** In Equation 2 above, **z1** may correspond to z coordinates of the reference point **P.** The electronic device 101 may obtain the height of the image 410 based on the **y3.** For example, the electronic device 101 may obtain the height of the image 410 based on the result value of (**y3 * 2**). For example, the result value of (**y3 * 2**) may be referred to as **y2.** The electronic device 101 may identify an area for segmenting the image 410, based on the reference surface identified based on the reference point **P.** The electronic device 101 may segment the area into a plurality of partial areas, using the window. For example, a first partial area among the plurality of partial areas may be spaced apart from a second partial area by a designated gap. The designated gap may be changed by the speed of the electronic device 101.

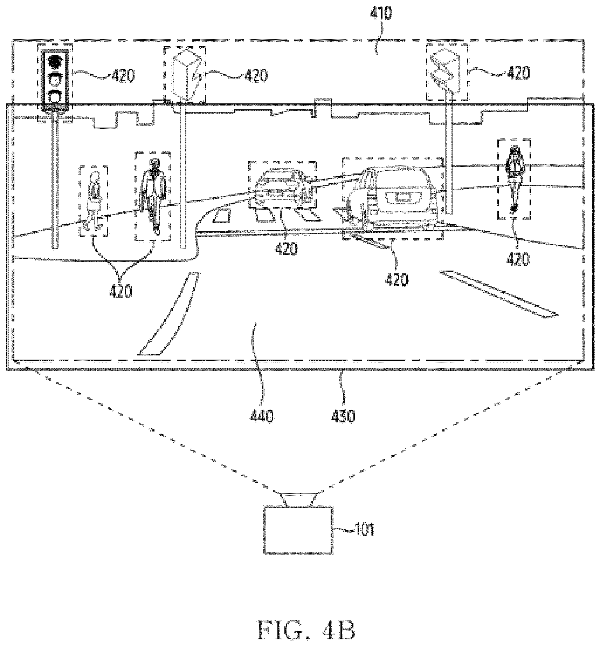

Referring to FIG. 4B, according to an embodiment, the electronic device 101 may identify a plurality of visual objects 420 in the image 410. The electronic device 101 may identify an area in which the plurality of visual objects 420 are identified by a specified number of times or more in the image 410. For example, the electronic device 101 may identify an area 430 for segmenting the image 410, based on identifying the plurality of visual objects 420 of the specified number or more. The electronic device 101 may segment the area 430 into a plurality of partial areas, using the window.

For example, the electronic device 101 may identify the plurality of visual objects 420 based on a neural network for image segmentation such as a U-net in the area 430. The electronic device 101 may identify an area corresponding to the sky in the image 410 based on identifying the plurality of visual objects 420. The electronic device 101 may identify a visual object 440 corresponding to a reference surface (e.g., the ground), based on identifying the area corresponding to the sky. The electronic device 101 may identify the height of the window, based on the area including the visual object 440 corresponding to the reference surface. The electronic device 101 may identify a width of the window based on an FOV of the image 410. For example, the width of the window may be obtained based on the FOV. For example, the width of the window may be obtained based on Equations 3 to 5 to be described later.

$$FOV = 2 * tan^{-1}(\frac{y2}{2f}) \quad \text{(Equation 3)}$$

Referring to Equation 3 above, for example, the **FOV** may include the image 410 and/or the FOV of the camera. For example, **y2** may include the height of the image 410. For example, **the** y2 may include the number of pixels in the second direction of the image 410. For example, **f** may include a focal length of the camera. "tan-1" represents an inverse tangent.

$$NCI=(FOV/20)*2 + 1 \quad \text{(Equation 4)}$$

Referring to Equation 4 above, the 'NCI (the number of total crop images)' may include the number of a plurality of partial areas formed in the x-axis direction of the image 410. For example, the 'FOV' may be a value obtained based on Equation 3. For example, in Equation 4, the number '2' and/or '1' may be a designated value that may be changeable. The numeral '20' of Equation 4 may be an FOV in the horizontal direction of one lane in the FOV. The numeral '20' of Equation 4 may be an empirically determined value that may be replaced with another value according to various embodiments.

$$RCS = (\frac{input\ width}{NCI+1} * 2) \quad \text{(Equation 5)}$$

Referring to Equation 5 above, for example, the 'RCS (region of interest (ROI) crop size)' may include the width of the window. For example, the 'input width' may include the width of the image 410. For example, the 'input width' may include the number of pixels formed in the third direction of the image 410. For example, the 'NCI' may be a result value obtained based on Equation 4 above. For example, the numerals '1' and/or '2' may be designated values that may be changeable.

According to an embodiment, the electronic device 101 may segment the area including the visual object 440 corresponding to the reference surface into a plurality of partial areas, using the window, based on the width and the height of the window. The electronic device 101 may sequentially input the plurality of partial areas into the neural network. The electronic device 101 may identify an external object in the partial area, based on the plurality of partial areas sequentially input.

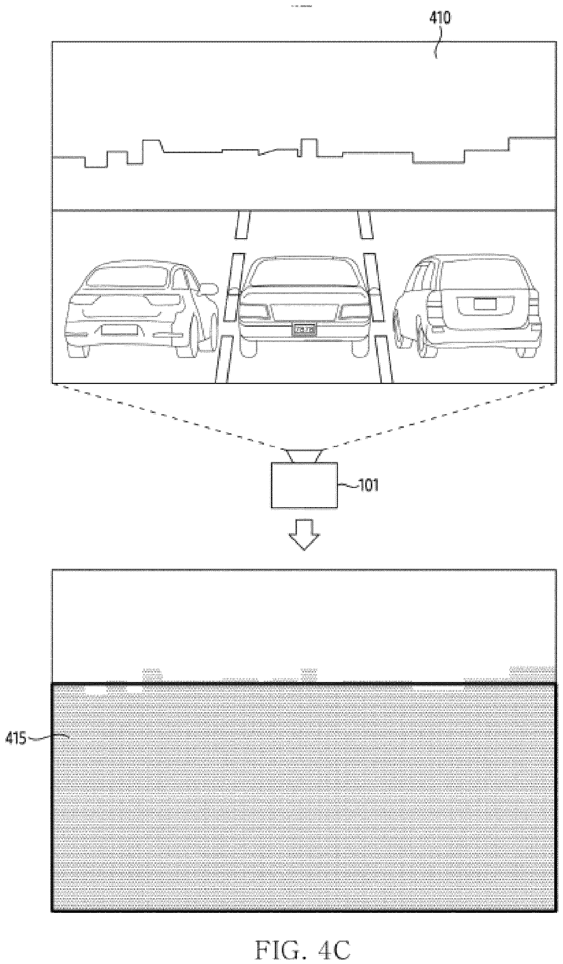

Referring to FIG. 4C, according to an embodiment, the electronic device 101 may perform image processing for the image 410. The image processing may be referred to as pyramid image processing. For example, the pyramid image processing may include a Gaussian pyramid, a Laplacian pyramid, and/or a steerable pyramid. For example, the electronic device 101 may perform the image processing for the image 410 based on a morphology operation. The morphology operation may include erosion and/or dilation.

The electronic device 101 may obtain an image 415 based on the image processing for the image 410. For example, the electronic device 101 may change colors of a plurality of visual objects identified within the image 410. For example, the electronic device 101 may change a first portion corresponding to the plurality of visual objects in the image 410 to a first color (e.g., black). The electronic device 101 may obtain the image 415 in which the first portion corresponding to the plurality of visual objects has been changed to the first color. The electronic device 101 may change a second portion, which is different from the first portion, to a second color (e.g., white). The electronic device 101 may obtain the image 415 in which colors of the first portion and the second portion have been changed. The electronic device 101 may identify a reference surface, based on that, within the image 415, a ratio of the first colors in the pixels arranged in the third direction of the image 415 is identified more than a preset ratio. For example, the electronic device 101 may identify an area for segmenting the image 415, based on identifying the reference surface. The electronic device 101 may segment the area, using a window.

As described above, according to an embodiment, the electronic device 101 may segment an image based on a window. The electronic device 101 may sequentially input an image segmented into a plurality of partial areas to a neural network. The electronic device 101 may identify an external object in the plurality of partial areas, based on inputting the plurality of partial areas to the neural network. The electronic device 101 may reduce the usage of the processor by identifying the external object based on the segmented image. The electronic device 101 may identify an external object in the partial area by identifying the external object based on the segmented image.

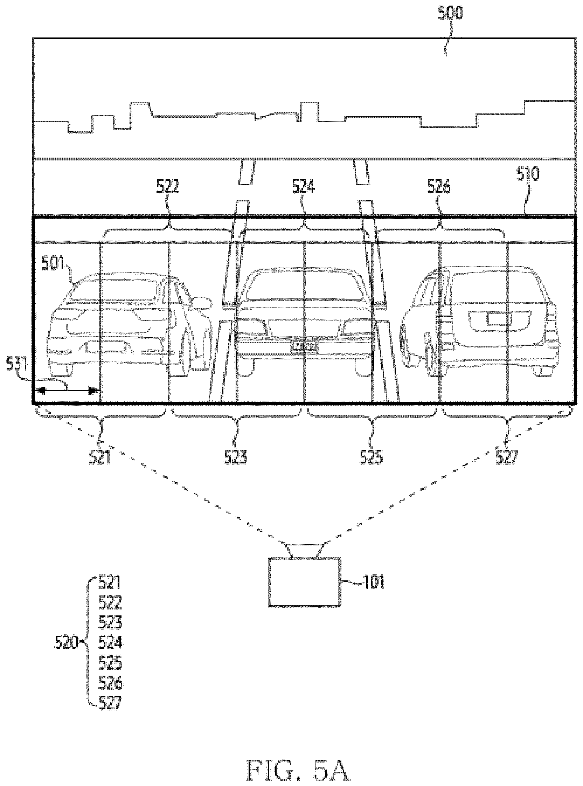

FIGS. 5A to 5C are diagrams for describing an operation of the electronic device 101 for identifying an external object, according to an embodiment. The electronic device 101 of FIGS. 5A to 5D may include the electronic device 101 of FIGS. 1, 2, 3A, 3B, 4A, 4B, and/or 4C. Operations of FIGS. 5A to 5D may be performed by the processor 120 of FIG. 1. The operations of FIGS. 5A to 5D may include operations of identifying an external object using a neural network.

Referring to FIGS. 5A to 5B, according to an embodiment, the electronic device 101 may obtain an image 500 through a camera (e.g., the camera 140 of FIG. 1). According to an embodiment, the electronic device 101 may identify a width and a height of a window for segmenting the image 500. The width and the height of the window may be identified based on the operations of FIGS. 4A to 4C. The electronic device 101 may obtain a plurality of partial areas 520 in a first area 510 using the window, based on the width and the height. For example, the partial areas 520 may be disposed to be spaced apart from each other by a first gap 531. For example, the first gap 531 may include a gap between first edges (e.g., the left edge) of each of the partial areas 520. For example, the first gap 531 may include a gap between second edges (e.g., the right edge) of each of the partial areas 520. For example, the first gap 531 may include a gap between center points of each of the partial areas 520. For example, the first gap 531 may be a gap corresponding to half the width of the window. For example, a first partial area 521, a second partial area 522, a third partial area 523, a fourth partial area 524, a fifth partial area 525, a sixth partial area 526, and/or a seventh partial area 527 may have the same size. The number of the partial areas 520 is not limited thereto. According to an embodiment, the electronic device 101 may sequentially input the first partial area 521 to the seventh partial area 527 into a neural network. The electronic device 101 may identify an external object 501 included in at least one of the partial areas 520, based on the partial areas 520 input to the neural network.

According to an embodiment, the electronic device 101 may input the plurality of areas 520 to the neural network. The electronic device 101 may identify the external object 501 in the plurality of areas 520, based on inputting the plurality of areas 520 to the neural network.

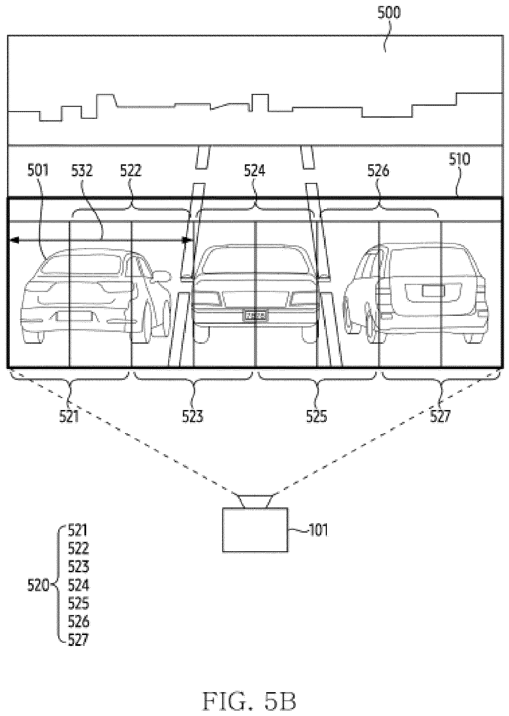

Referring to FIG. 5B, according to an embodiment, the electronic device 101 may input the partial areas 520 to the neural network. The electronic device 101 may identify, from the neural network, whether the external object 501 is included in the first partial area 521. The electronic device 101 may identify the first gap 531 and/or the second gap 532, based on whether the external object 501 is included in the first partial area 521. For example, the electronic device 101 may identify the external object 501 from the first partial area 521. The electronic device 101 may identify the second gap 532 based on identifying the external object 501 from the first partial area 521. The electronic device 101 may obtain a fourth partial area 524 based on the second gap 532. For example, based on identifying the external object 501 from the first partial area 521, the electronic device 101 may identify the second gap 532 corresponding to the partial areas (e.g., the first partial area 521, the second partial area 522, and the third partial area 523) in which the external object 501 is identified. Based on identifying the second gap 532, the electronic device 101 may obtain the fourth partial area 524 spaced apart from the first partial area 521 by the second gap 532. The electronic device 101 may input the fourth partial area 524 to the neural network, based on obtaining the fourth partial area 524.

Referring to FIGS. 5C to 5D, according to an embodiment, the electronic device 101 may identify the speed of the electronic device 101, based on a sensor (e.g., the sensor 150 of FIG. 1). The electronic device 101 may change the gap between the partial areas (e.g., the partial areas 520 of FIG. 5A and/or FIG. 5B), based on the speed. For example, the electronic device 101 may change the gap between some of the partial areas, based on the speed. According to an embodiment, the electronic device 101 may change the gap between the partial areas 540 in the area corresponding to a plurality of lanes 250, based on the speed of the electronic device 101.

According to an embodiment, the electronic device 101 may form a plurality of partial areas 520 overlappingly. The electronic device 101 may form the plurality of partial areas 520 to overlap each other, based on the width of the window. For example, the electronic device 101 may overlap the partial areas by a first ratio of the width of the window. For example, the first ratio may include about 50%. For example, the first ratio may be referred to as '1/2'. However, the disclosure is not limited thereto.

According to an embodiment, the electronic device 101 may identify a first speed of the electronic device 101, which is less than or equal to a first reference speed. For example, the first reference speed may include about 40 km/h. The electronic device 101 may overlap the plurality of partial areas by a second ratio less than the first ratio, in a first sub-area including an edge of the image, based on identifying the first speed that is less than or equal to the first reference speed. For example, the second ratio may be substantially the same as a square of the first ratio. For example, in case that the first ratio is given as '$\frac{1}{n}$', the second ratio may be given as '$\left(\frac{1}{n}\right)^{m}$'. For example, when n = m = 2, the first ratio may be 1/2 and the second ratio may be 1/4. In the above example, the number of partial areas overlapping the sub-area may vary depending on whether the speed of the electronic device 101 and/or the vehicle including the electronic device 101 is equal to or greater than or equal to about 40 km/h or less than or equal to 40 km/h, which is the first reference speed. For example, when the speed of the electronic device 101 is greater than or equal to the first reference speed, the partial areas may overlap the first sub-area according to the first ratio (=1/2). For example, when the speed of the electronic device 101 is less than or equal to the first reference speed, the partial areas may overlap the first sub-area according to the second ratio (= 1/4).

According to an embodiment, the electronic device 101 may identify a second speed of the electronic device 101, which exceeds a second reference speed. For example, the second reference speed may include about 60 km/h. Based on identifying the second speed exceeding the second reference speed, the electronic device 101 may overlap the plurality of partial areas by a second ratio that is less than the first ratio, in a second sub-area including an edge of the image. For example, the second ratio may be substantially the same as a square of the first ratio. For example, in case that the first ratio is given as ' $\frac{1}{n}$ ', the second ratio may be given as ' $\left(\frac{1}{n}\right)^{m}$ '.

Referring to FIG. 5C, according to an embodiment, the electronic device 101 may identify the speed of the electronic device 101, based on a sensor. The electronic device 101 may change the gap between a plurality of partial areas corresponding to a designated lane among the plurality of lanes 250, based on the speed. For example, the electronic device 101 may identify the external object, using the partial areas (541, 542) within the sub-area including the second lane 252. For example, the electronic device 101 may identify the second speed exceeding the second reference speed. For example, the second reference speed may include about 60 km/h. The electronic device 101 may change the gap between the plurality of areas. For example, the electronic device 101 may change the gap between the first partial area 541 and the second partial area 542 to a first gap 533. The electronic device 101 may identify an external object within a plurality of partial areas of the changed gap.

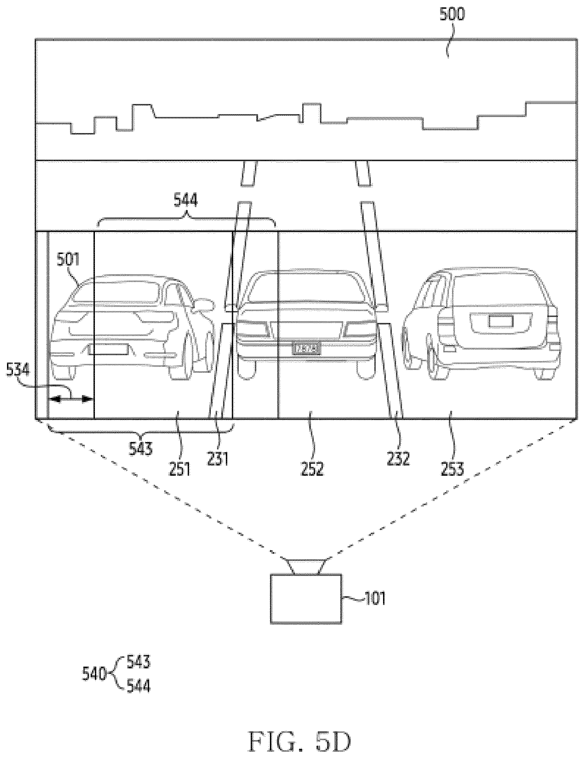

Referring to FIG. 5D, according to an embodiment, the electronic device 101 may identify the speed of the electronic device 101, based on a sensor. The electronic device 101 may change the gap between a plurality of partial areas corresponding to a designated lane among a plurality of lanes 250, based on the speed. For example, the designated lane may include a first lane 251 and a third lane 253. The electronic device 101 may identify an external object, using partial areas (543, 544) within the sub-area 540 including the left edge or the right edge. For example, the electronic device 101 may identify a first speed that is less than or equal to the first reference speed. For example, the first reference speed may include about 60 km/h. The electronic device 101 may change the gap between the plurality of areas. For example, the electronic device 101 may change the gap between the first partial area 543 and the second partial area 544 to the second gap 534. The electronic device 101 may identify an external object within a plurality of partial areas of the changed gap. The first gap 533 of FIG. 5C and the second gap 534 of FIG. 5D may be substantially the same as each other.

As described above, according to an embodiment, the electronic device 101 may identify an external object, based on a partial area of an image input to the neural network. The electronic device 101 may sequentially input the plurality of partial areas in the image to the neural network. The electronic device 101 may identify the external object in the partial area, based on the sequentially input partial areas. When the external object is identified within the partial area, the electronic device 101 may input different partial areas not including the partial area to the neural network. The electronic device 101 may reduce the usage of the processor by performing the above-described operations.

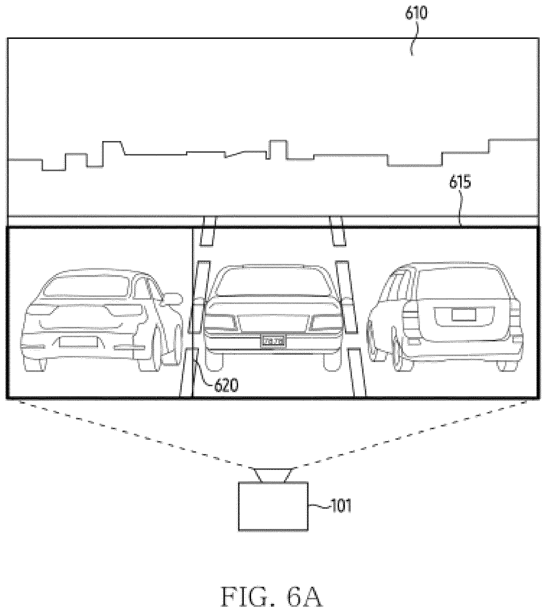

FIGS. 6A to 6C illustrate an example of an operation of an electronic device performed to identify an external object. The operation of the electronic device 101 performed with reference to FIGS. 6A to 6C may be performed by the electronic device 101 of FIGS. 1, 2, 3A, 3B, 4A, 4B, 4C, 5A, 5B, 5C, and/or 5D. The operations of FIGS. 6A to 6C may be performed by the processor 120 of FIG. 1. The operations of FIGS. 6A to 6C may include an operation of identifying an external object using a neural network.

Referring to FIGS. 6A to 6C, according to an embodiment, the electronic device 101 may obtain an image 610 through a camera (e.g., the camera 140 of FIG. 1). For example, the image 610 may include an image having a size different from that of an image used as input to a neural network. The electronic device 101 may change the size of the image 610 to a size corresponding to the size of the image used as the input to the neural network. For example, the electronic device 101 may identify an external object, based on inputting partial areas having a first size to the neural network. The electronic device 101 may obtain a partial area 620 having a size larger than that of the partial area used in the neural network. The electronic device 101 may change the size of the partial area 620 based on obtaining the partial area 620. For example, the electronic device 101 may change the size of the partial area 620 based on image processing of the partial area 620. For example, the electronic device 101 may perform down-scaling and/or up-scaling of the partial area 620. The electronic device 101 may change the size of the partial area 620 based on performing the down-scaling and/or the up-scaling.

According to an embodiment, the electronic device 101 may execute the neural network using the partial area 620 including an upper left vertex of a first area 615, based on obtaining the partial area 620 having a size larger than that of the partial area used in the neural network. For example, the electronic device 101 may perform an operation of identifying the external object from an upper left end of the first area 615 to an upper right end of the first area 615.

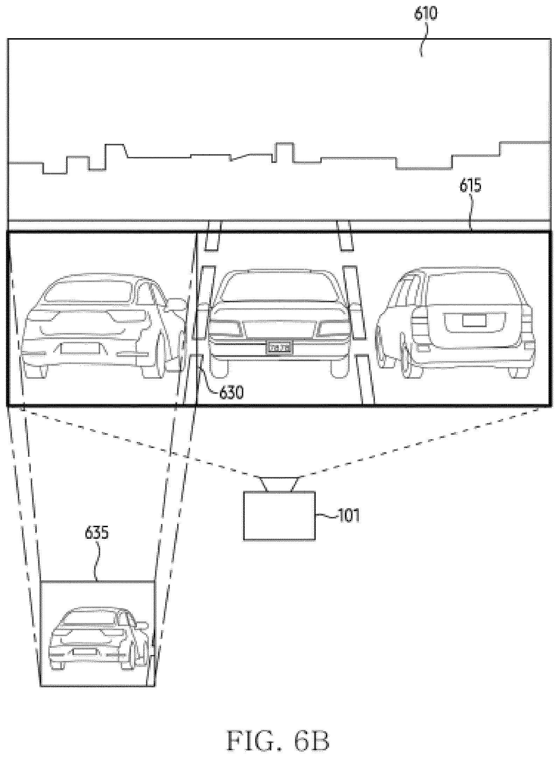

Referring to FIG. 6B, according to an embodiment, the electronic device 101 may obtain a partial area 630 in the image 610. The electronic device 101 may identify that the size of the partial area 630 is larger than the size required by the neural network. The electronic device 101 may reduce the size of the partial area 630 based on identifying the size of the partial area 630, which is larger than the size required by the neural network. For example, the electronic device 101 may reduce the size of the partial area 630 based on down-scaling of the partial area 630. The electronic device 101 may obtain a partial area 635 in which the size of the partial area 630 is reduced. The electronic device 101 may input the partial area 635 processed by the down-scaling to the neural network. The electronic device 101 may identify the external object in the partial area 635, based on inputting the partial area 635 to the neural network.

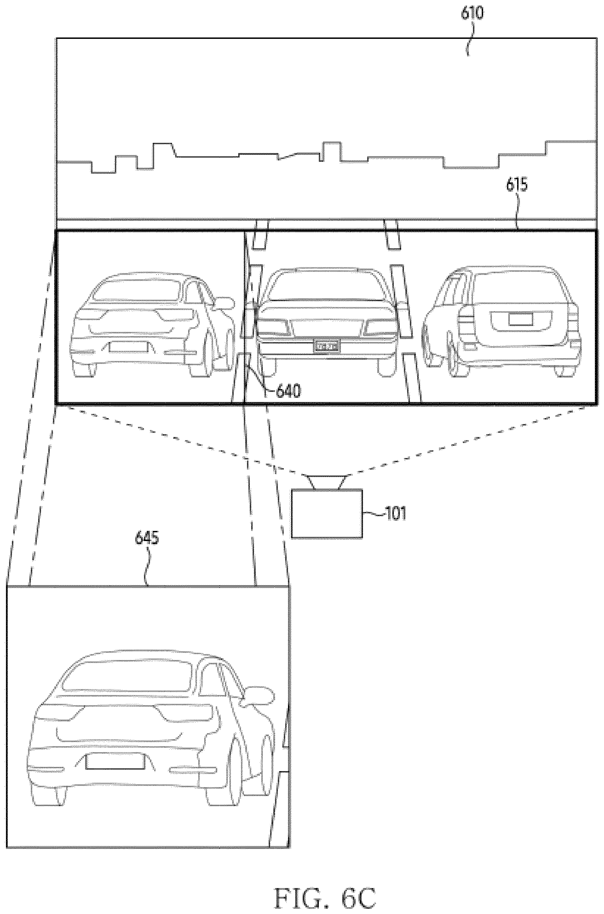

Referring to FIG. 6C, according to an embodiment, the electronic device 101 may obtain a partial area 640 in the image 610. The electronic device 101 may identify that the size of the partial area 640 is smaller than the size required by the neural network. The electronic device 101 may expand the size of the partial area 640 based on identifying the size of the partial area 640, which is smaller than the size required by the neural network. For example, the electronic device 101 may expand the size of the partial area 640 based on up-scaling of the partial area 640. The electronic device 101 may obtain a partial area 645 in which the size of the partial area 640 is expanded. The electronic device 101 may input the partial area 645 processed by the up-scaling to the neural network. The electronic device 101 may identify the external object in the partial area 645, based on inputting the partial area 645 to the neural network.

As described above, according to an embodiment, the electronic device 101 may identify an external object, based on a partial area of an image input to the neural network. For example, the neural network may include a neural network for identifying the external object using the partial area of the image. The electronic device 101 may change the size of the partial area of the image for input to the neural network. The electronic device 101 may identify the external object within the image of various sizes by inputting the partial area having a changed size to the neural network. The electronic device 101 may identify an external object having a relatively small size by identifying the external object using the neural network. The electronic device 101 may identify the external object based on the partial area, thereby reducing the usage of the processor.

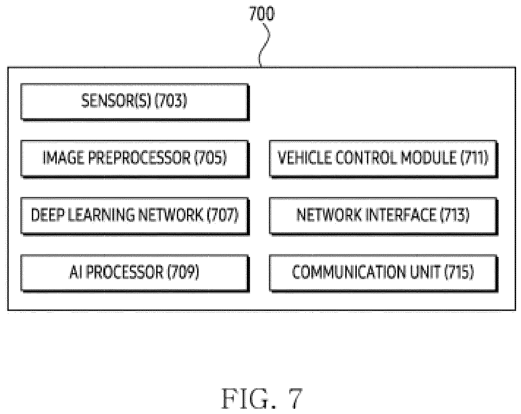

FIG. 7 is an example block diagram illustrating an autonomous driving system of a vehicle according to an embodiment.

The autonomous driving system 700 of the vehicle according to FIG. 7 may be a deep learning network including sensors 703, an image preprocessor 705, a deep learning network 707, an artificial intelligence (AI) processor 709, a vehicle control module 711, a network interface 713, and a communication unit 715. In various embodiments, each element may be connected via a variety of interfaces. For example, sensor data detected and output by the sensors 703 may be fed to the image preprocessor 705. The sensor data processed by the image preprocessor 705 may be fed to the deep learning network 707 run on the AI processor 709. An output of the deep learning network 707 run by the AI processor 709 may be fed to the vehicle control module 711. Intermediate results of the deep learning network 707 run on the AI processor 709 may be fed to the AI processor 709. In various embodiments, the network interface 713 communicates with an electronic device in the vehicle to transmit autonomous driving route information and/or autonomous driving control commands for autonomous driving of the vehicle to its internal block components. In an embodiment, the network interface 713 may be used to transmit sensor data obtained through the sensor(s) 703 to an external server. In some embodiments, the autonomous driving control system 700 may include additional or fewer components as appropriate. For example, in some embodiments, the image preprocessor 705 may be an optional component. As another example, a post-processing element (not shown) may be included in the autonomous driving control system 700 to perform post-processing of the output of the deep learning network 707 before the output is provided to the vehicle control module 711.

In some embodiments, the sensors 703 may include one or more sensors. In various embodiments, the sensors 703 may be attached to various different positions of the vehicle. The sensors 703 may be arranged to face one or more different directions. For example, the sensors 703 may be attached to the front, sides, rear, and/or roof of the vehicle to face directions such as forward-facing, rear-facing, side-facing and the like. In some embodiments, the sensors 703 may be image sensors such as e.g., high dynamic range cameras. In some embodiments, the sensors 703 may include non-visual sensors. In some embodiments, the sensors 703 may include a radar, a light detection and ranging (LiDAR), and/or ultrasonic sensors in addition to the image sensor. In some embodiments, the sensors 703 are not mounted on the vehicle having the vehicle control module 711. For example, the sensors 703 may be incorporated as a part of a deep learning system for capturing sensor data and may be installed onto an environment or a roadway and/or mounted on surrounding vehicles.

In some embodiments, the image preprocessor 705 may be used to preprocess sensor data of the sensors 703. For example, the image preprocessor 705 may be used to preprocess sensor data to split sensor data into one or more components, and/or to post-process the one or more components. In some embodiments, the image preprocessor 705 may be any one of a graphics processing unit (GPU), a central processing unit (CPU), an image signal processor, or a specialized image processor. In various embodiments, the image preprocessor 705 may be a tone-mapper processor for processing high dynamic range data. In some embodiments, the image preprocessor 705 may be a component of the AI processor 709.

In some embodiments, the deep learning network 707 may be a deep learning network for implementing control commands for controlling the autonomous vehicle. For example, the deep learning network 707 may be an artificial neural network such as a convolution neural network (CNN) trained using sensor data, and the output of the deep learning network 707 is provided to the vehicle control module 711.

In some embodiments, the AI processor 709 may be a hardware processor for running the deep learning network 707. In some embodiments, the AI processor 709 may be a specialized AI processor adapted to perform inference on sensor data through a CNN. In some embodiments, the AI processor 709 may be optimized for a bit depth of the sensor data. In some embodiments, the AI processor 709 may be optimized for deep learning operations such as operations in neural networks including convolution, inner product, vector, and/or matrix operations. In some embodiments, the AI processor 709 may be implemented through a plurality of graphics processing units (GPUs) capable of effectively performing parallel processing.

In various embodiments, the AI processor 709 may be coupled, through an input/output interface, to a memory configured to provide an AI processor having instructions causing the AI processor to perform deep learning analysis on the sensor data received from the sensor(s) 703 while the AI processor 709 is executed, and determine a result of machine learning used to operate a vehicle at least partially autonomously. In some embodiments, the vehicle control module 711 may be used to process commands for vehicle control outputted from the AI processor 709, and to translate the output of the AI processor 709 into commands for controlling modules of each vehicle in order to control various modules in the vehicle. In some embodiments, the vehicle control module 711 is used to control an autonomous driving vehicle. In some embodiments, the vehicle control module 711 may adjust the steering and/or speed of the vehicle. For example, the vehicle control module 711 may be used to control driving of a vehicle such as e.g., deceleration, acceleration, steering, lane change, keeping lane or the like. In some embodiments, the vehicle control module 711 may generate control signals for controlling vehicle lighting, such as e.g., brake lights, turns signals, and headlights. In some embodiments, the vehicle control module 711 may be used to control vehicle audio-related systems such as e.g., a vehicle's sound system, vehicle's audio warnings, a vehicle's microphone system, and a vehicle's horn system.

In some embodiments, the vehicle control module 711 may be used to control notification systems including alert systems for notifying passengers and/or a driver of driving events, such as e.g., approaching an intended destination or a potential collision. In some embodiments, the vehicle control module 711 may be used to adjust sensors such as the sensors 703 of the vehicle. For example, the vehicle control module 711 may control to modify the orientation of the sensors 703, change the output resolution and/or format type of the sensors 703, increase or decrease a capture rate, adjust a dynamic range, and adjust the focus of the camera. In addition, the vehicle control module 711 may control to turn on/off the operation of the sensors individually or collectively.

In some embodiments, the vehicle control module 711 may be used to change the parameters of the image preprocessor 705 by means of modifying a frequency range of filters, adjusting features and/or edge detection parameters for object detection, adjusting bit depth and channels, or the like. In various embodiments, the vehicle control module 711 may be used to control autonomous driving of the vehicle and/or driver assistance features of the vehicle.

In some embodiments, the network interface 713 may serve as an internal interface between the block components of the autonomous driving control system 700 and the communication unit 715. Specifically, the network interface 713 may be a communication interface for receiving and/or transmitting data including voice data. In various embodiments, the network interface 713 may be connected to external servers via the communication unit 715 to connect voice calls, receive and/or send text messages, transmit sensor data, update software of the vehicle to the autonomous driving system, or update software of the autonomous driving system of the vehicle.

In various embodiments, the communication unit 715 may include various wireless interfaces of a cellular or WiFi type. For example, the network interface 713 may be used to receive updates of the operation parameters and/or instructions for the sensors 703, the image preprocessor 705, the deep learning network 707, the AI processor 709, and the vehicle control module 711 from an external server connected via the communication unit 715. For example, a machine learning model of the deep learning network 707 may be updated using the communication unit 715. According to another embodiment, the communication unit 715 may be used to update the operating parameters of the image preprocessor 705, such as image processing parameters, and/or the firmware of the sensors 703.

In another embodiment, the communication unit 715 may be used to activate communication for emergency services and emergency contacts in an event of a traffic accident or a near-accident. For example, in a vehicle crash event, the communication unit 715 may be used to call emergency services for help, and may be used to externally notify the crash details and the location of the vehicle to the designated emergency services. In various embodiments, the communication unit 715 may update or obtain an expected arrival time and/or a location of destination.

According to an embodiment, the autonomous driving system 700 illustrated in FIG. 7 may be configured as an electronic device of a vehicle. According to an embodiment, when an autonomous driving release event occurs from the user while performing the autonomous driving of the vehicle, the AI processor 709 of the autonomous driving system 700 may make a control to input information related to the autonomous driving release event to the training set data of the deep learning network, thereby controlling to train the autonomous driving software of the vehicle.

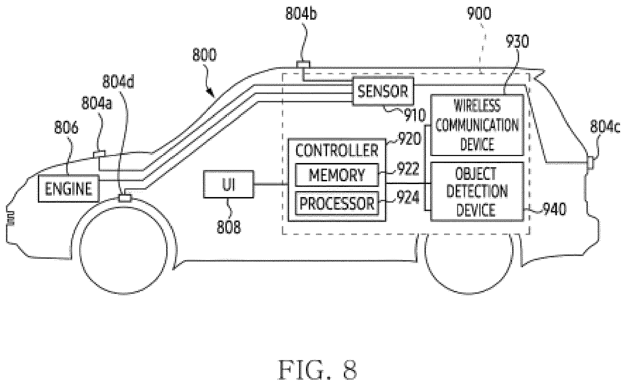

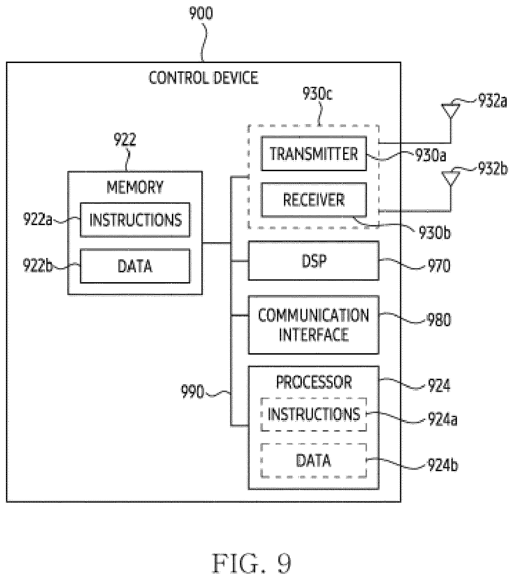

FIGS. 8 and 9 are example block diagrams illustrating an autonomous driving mobile body according to an embodiment. Referring to FIG. 8, the autonomous driving mobile body 800 according to the present embodiment may include a control device 900, sensing modules (804a, 804b, 804c, 804d), an engine 806, and a user interface 808.

The autonomous driving mobile body 800 may have an autonomous driving mode or a manual mode. For example, according to a user input received through the user interface 808, the manual mode may be switched to the autonomous driving mode, or the autonomous driving mode may be switched to the manual mode.

When the mobile body 800 is operated in the autonomous driving mode, the autonomous driving mobile body 800 may be operated under the control of the control device 900.

In this embodiment, the control device 900 may include a controller 920 including a memory 922 and a processor 924, a sensor 910, a communication device 930, and an object detection device 940.

Here, the object detection device 940 may perform all or some of functions of the distance measuring device (e.g., the electronic device 101).

In other words, in the present embodiment, the object detection device 940 is a device for detecting an object located outside the mobile body 800, and the object detection device 940 may be configured to detect an object located outside the mobile body 800 and generate object information according to a result of the detection.

The object information may include information on the presence or absence of an object, location information of the object, distance information between the mobile body and the object, and relative speed information between the mobile body and the object.

The object may include various objects located outside the mobile body 800, such as a traffic lane, another vehicle, a pedestrian, a traffic signal, light, a roadway, a structure, a speed bump, terrain, an animal, and the like. Here, the traffic signal may be of a concept including a traffic light, a traffic sign, a pattern or text drawn on a road surface. The light may be light generated from a lamp provided in another vehicle, light emitted from a streetlamp, or sunlight.

Further, the structure may indicate an object located around the roadway and fixed to the ground. For example, the structure may include, for example, a streetlamp, a street tree, a building, a telephone pole, a traffic light, a bridge, and the like. The terrain may include mountains, hills, and the like.

Such an object detection device 940 may include a camera module. The controller 920 may extract object information from an external image captured by the camera module and allow the controller 920 to process the information.

Further, the object detection device 940 may further include imaging devices for recognizing an external environment. A RADAR, a GPS device, a driving distance measuring device (odometer), other computer vision devices, ultrasonic sensors, and infrared sensors may be used in addition to a LIDAR, and these devices may be operated optionally or simultaneously as needed to enable more precise detection.

Meanwhile, the distance measuring device according to an embodiment of the disclosure may calculate the distance between the autonomous driving mobile body 800 and the object, and control the operation of the mobile body based on the distance calculated in association with the control device 900 of the autonomous driving mobile body 800.

For example, when there is a possibility of collision depending upon the distance between the autonomous driving mobile body 800 and the object, the autonomous driving mobile body 800 may control the brake to slow down or stop. As another example, when the object is a moving object, the autonomous driving mobile body 800 may control the driving speed of the autonomous driving mobile body 800 to maintain a predetermined distance or more from the obj ect.

The distance measuring device according to an embodiment of the disclosure may be configured as one module within the control device 900 of the autonomous driving mobile body 800. In other words, the memory 922 and the processor 924 of the control device 900 may be configured to implement in software a collision avoidance method according to the present disclosure.

Further, the sensor 910 may be connected to the sensing modules (804a, 804b, 804c, 804d) to obtain various sensing information about the environment inside and outside the mobile body. Here, the sensor 910 may include, for example, a posture sensor (e.g., a yaw sensor, a roll sensor, a pitch sensor), a collision sensor, a wheel sensor, a speed sensor, an inclination sensor, a weight detection sensor, a heading sensor, a gyro sensor, a position module, a mobile body forward/backward sensor, a battery sensor, a fuel sensor, a tire sensor, a steering sensor for steering wheel rotation, a mobile body internal temperature sensor, a mobile body internal humidity sensor, an ultrasonic sensor, an illuminance sensor, an accelerator pedal position sensor, a brake pedal position sensor, and the like.

As such, the sensor 910 may obtain various sensing signals, such as e.g., mobile body posture information, mobile body collision information, mobile body direction information, mobile body position information (GPS information), mobile body angle information, mobile body speed information, mobile body acceleration information, mobile body inclination information, mobile body forward/backward driving information, battery information, fuel information, tire information, mobile body lamp information, mobile body internal temperature information, mobile body internal humidity information, steering wheel rotation angle, mobile body external illuminance, pressure applied to an accelerator pedal, pressure applied to a brake pedal, and so on.

Further, the sensor 910 may further include an accelerator pedal sensor, a pressure sensor, an engine speed sensor, an air flow sensor (AFS), an intake air temperature sensor (ATS), a water temperature sensor (WTS), a throttle position sensor (TPS), a top dead center (TDC) sensor, a crank angle sensor (CAS), and the like.

As such, the sensor 910 may generate mobile body state information based on various detected data.

A wireless communication device 930 may be configured to implement wireless communication between the autonomous driving mobile bodies 800. For example, the autonomous driving mobile body 800 can communicate with a mobile phone of the user or another wireless communication device 930, another mobile body, a central apparatus (traffic control device), a server, or the like. The wireless communication device 930 may transmit and receive wireless signals according to a wireless access protocol. The wireless communication protocol may be, for example, of Wi-Fi, Bluetooth, Long-Term Evolution (LTE), Code Division Multiple Access (CDMA), Wideband Code Division Multiple Access (WCDMA), and Global Systems for Mobile Communications (GSM), and the communication protocol is not limited thereto.

Further, according to the present embodiment, the autonomous driving mobile body 800 may implement wireless communication between mobile bodies via the wireless communication device 930. In other words, the wireless communication device 930 may communicate with another mobile body and other mobile bodies over the road through vehicle-to-vehicle (V2V) communication. The autonomous driving mobile body 800 may transmit and receive information, such as driving warnings and traffic information, via the vehicle-to-vehicle communication, and may request information or receive such a request from another vehicle. For example, the wireless communication device 930 may perform the V2V communication with a dedicated short-range communication (DSRC) apparatus or a cellular-V2V (C-V2V) apparatus. In addition to vehicle-to-vehicle communication, vehicle-to-everything (V2X) communication between a vehicle and another object (e.g., an electronic device carried by a pedestrian) may also be implemented using the wireless communication device 930.

Further, the wireless communication device 930 may obtain, as information for autonomous driving of the autonomous driving mobile body 800, information generated by various mobility devices including infrastructure (traffic lights, CCTVs, RSUs, eNode B, etc.), other autonomous driving/non-autonomous driving vehicles or the like that are located on a roadway over a non-terrestrial network other than a terrestrial network.

For example, the wireless communication device 930 may perform wireless communication with a low earth orbit (LEO) satellite system, a medium earth orbit (MEO) satellite system, a geostationary orbit (GEO) satellite system, a high altitude platform (HAP) system, and so on, all these systems constituting a non-terrestrial network, via a dedicated non-terrestrial network antenna mounted on the autonomous driving mobile body 800.

For example, the wireless communication device 930 may perform wireless communication with various platforms that configure a Non-Terrestrial Network (NTN) according to the wireless access specification complying with the 5G NR NTN (5th Generation New Radio Non-Terrestrial Network) standard currently being discussed in 3GPP and others, but the disclosure is not limited thereto.

In this embodiment, the controller 920 may control the wireless communication device 930 to select a platform capable of appropriately performing the NTN communication in consideration of various information, such as the location of the autonomous driving mobile body 800, the current time, available power, and the like and to perform wireless communication with the selected platform.

In this embodiment, the controller 920, which is a unit for controlling the overall operation of each unit in the mobile body 800, may be configured at the time of manufacture by a manufacturer of the mobile body or may be additionally adapted to perform an autonomous driving function after its manufacture. Alternatively, a configuration may be included for enabling the controller to continue ongoing additional functions through upgrades to the controller 920 configured at the time of its manufacturing. Such a controller 920 may be referred to as an electronic control unit (ECU).

The controller 920 may be configured to collect various data from the sensor 910 connected thereto, the object detection device 940, the communication device 930, and the like, and may transmit a control signal based on the collected data to the sensor 910, the engine 806, the user interface 808, the wireless communication device 930, and the object detection device 940 that are included as other components in the mobile body. Further, although not shown herein, the control signal may be also transmitted to an accelerator, a braking system, a steering device, or a navigation device related to driving of the mobile body.

According to the present embodiment, the controller 920 may control the engine 806, and for example, the controller 920 may control the engine 806 to detect a speed limit of the roadway on which the autonomous driving mobile body 800 is driving and to prevent its driving speed from exceeding the speed limit, or may control the engine 806 to accelerate the driving speed of the autonomous driving mobile body 800 within a range not exceeding the speed limit.

Further, in case where the autonomous driving mobile body 800 is approaching the lane or departing from the lane during the driving of the autonomous driving mobile body 800, the controller 920 may determine whether such approaching the lane or departing from the lane is due to a normal driving condition or other driving conditions, and control the engine 806 to control the driving of the vehicle based on the result of determination. More specifically, the autonomous driving mobile body 800 may detect lanes formed on both sides of the lane in which the vehicle is driving. In such a case, the controller 920 may determine whether the autonomous driving mobile body 800 is approaching the lane or departing from the lane, and if it is determined that the autonomous driving mobile body 800 is approaching the lane or departing from the lane, then the controller 920 may determine whether such driving is in accordance with the correct driving condition or other driving conditions. Here, an example of the normal driving condition may be a situation where it is necessary to change the lane of the mobile body. Further, an example of other driving conditions may be a situation where it is not necessary to change the lane of the mobile body. When it is determined that the autonomous driving mobile body 800 is approaching or leaving the lane in a situation where it is not necessary for the mobile body to change the lane, the controller 920 may control the driving of the autonomous driving mobile body 800 such that the autonomous driving mobile body 800 does not leave the lane and continue to drive normally in that lane.

When another mobile body or any obstruction exists in front of the mobile body, the controller may control the engine 806 or the braking system to decelerate the mobile body, and control the trajectory, the driving route, and the steering angle of the mobile body in addition to the driving speed. Alternatively, the controller 920 may control the driving of the mobile body by generating necessary control signals based on information collected from the external environment, such as, e.g., the driving lane of the mobile body, the driving signals, and the like.

In addition to generating its own control signals, the controller 920 may communicate with a neighboring mobile body or a central server and transmit commands for controlling peripheral devices through the information received therefrom, thereby controlling the driving of the mobile body.

Further, when the position of the camera module 950 changes or the angle of view changes, it may be difficult to accurately recognize the mobile body or the lane in accordance with the present embodiment, and thus the controller 920 may generate a control signal for controlling to perform calibration of the camera module 950 in order to prevent such a phenomenon. Accordingly, in this embodiment, the controller 920 may generate a calibration control signal to the camera module 950 to continuously maintain the normal mounting position, orientation, angle of view, etc. of the camera module 950, even if the mounting position of the camera module 950 is changed due to vibrations or impacts generated according to the movement of the autonomous driving mobile body 800. The controller 920 may generate a control signal to perform calibration of the camera module 920, in case where the pre-stored initial information of mounting position, orientation, and angle of view of the camera module 920 varies by more than a threshold value from the initial mounting position, direction, and angle of view information of the camera module 920 measured during the driving of the autonomous driving mobile body 800.

In this embodiment, the controller 920 may include a memory 922 and a processor 924. The processor 924 may execute software stored in the memory 922 according to a control signal of the controller 920. More specifically, the controller 920 may store in the memory 922 data and instructions for performing the lane detection method in accordance with the present disclosure, and the instructions may be executed by the processor 924 to implement the one or more methods disclosed herein.

In such a circumstance, the memory 922 may be included in a non-volatile recording medium executable by the processor 924. The memory 922 may store software and data through an appropriate internal and external device. The memory 922 may be comprised of a random access memory (RAM), a read only memory (ROM), a hard disk, and another memory 922 connected to a dongle.

The memory 922 may store at least an operating system (OS), a user application, and executable instructions. The memory 922 may also store application data, array data structures and the like.

The processor 924 may be a microprocessor or an appropriate electronic processor, such as a controller, a microcontroller, or a state machine.

The processor 924 may be implemented as a combination of computing devices, and the computing device may include a digital signal processor, a microprocessor, or an appropriate combination thereof.

Meanwhile, the autonomous driving mobile body 800 may further include a user interface 808 for a user input to the control device 900 described above. The user interface 808 may allow the user to input information with appropriate interaction. For example, it may be implemented as a touch screen, a keypad, a control button, etc. The user interface 808 may transmit an input or command to the controller 920, and the controller 920 may perform a control operation of the mobile body in response to the input or command.

Further, the user interface 808 may allow a device outside the autonomous driving mobile body 800 to communicate with the autonomous driving mobile body 800 through the wireless communication device 930. For example, the user interface 808 may be in association with a mobile phone, a tablet, or other computing devices.

Furthermore, this embodiment describes that the autonomous driving mobile body 800 includes the engine 806, but it may be also possible to include another type of propulsion system. For example, the mobile body may be operated with electrical energy or may be operable by means of hydrogen energy or a hybrid system in combination thereof. Thus, the controller 920 may include a propulsion mechanism according to the propulsion system of the autonomous driving mobile body 800, and may provide control signals to components of each of the propulsion mechanism accordingly.

Hereinafter, a detailed configuration of the control device 900 according to the present embodiment will be described in more detail with reference to FIG. 9.

The control device 900 includes a processor 924. The processor 924 may be a general-purpose single-chip or multi-chip microprocessor, a dedicated microprocessor, a microcontroller, a programmable gate array, or the like. The processor may be referred to as a central processing unit (CPU). In this embodiment, the processor 924 may be implemented with a combination of a plurality of processors.

The control device 900 also includes a memory 922. The memory 922 may be any electronic component capable of storing electronic information. The memory 922 may also include a combination of memories 922 in addition to a single memory.

Data and instructions 922a for performing a distance measuring method of the distance measuring device according to the present disclosure may be stored in the memory 922. When the processor 924 executes the instructions 922a, all or some of the instructions 922a and the data 922b required for executing the instructions may be loaded onto the processor 924 (e.g., 924a or 924b).

The control device 900 may include a transmitter 930a, a receiver 930b, or a transceiver 930c for allowing transmission and reception of signals. The one or more antennas (932a, 932b) may be electrically connected to the transmitter 930a, the receiver 930b, or each transceiver 930c, or may further include antennas.

The control device 900 may include a digital signal processor (DSP) 970. The DSP 970 may allow the mobile body to quickly process digital signals.

The control device 900 may include a communication interface 980. The communication interface 980 may include one or more ports and/or communication modules for connecting other devices to the control device 900. The communication interface 980 may allow the user and the control device 900 to interact with each other.

Various components of the control device 900 may be connected together by one or more buses 990, and the buses 990 may include a power bus, a control signal bus, a state signal bus, a data bus, and the like. Under the control of the processor 924, the components may transmit information to each other via the bus 990 and perform a desired function.

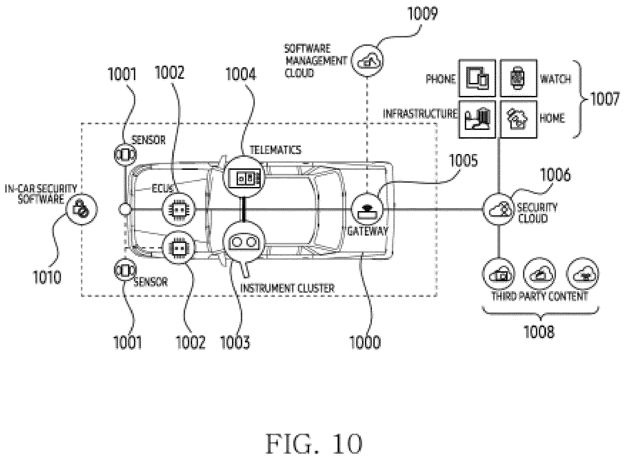

Meanwhile, in various embodiments, the control device 900 may be related to a gateway for communication with a security cloud. For example, referring to FIG. 10, the control device 900 may be related to a gateway 1005 for providing information obtained from at least one of components 1001 to 1004 of a vehicle 1000 to a security cloud 1006. For example, the gateway 1005 may be included in the control device 900. As another example, the gateway 1005 may be configured as a separate device in the vehicle 1000 distinguished from the control device 900. The gateway 1005 connects a software management cloud 1009 and a security cloud 1006, having different networks, with the network within the vehicle 1000 secured by in-car security software 1010, so that they can communicate with each other.

For example, a component 1001 may be a sensor. For example, the sensor may be used to obtain information about at least one of a state of the vehicle 1000 or a state around the vehicle 1000. For example, the component 1001 may include a sensor 910.

For example, a component 1002 may be an electronic control unit (ECU). For example, the ECU may be used for engine control, transmission control, airbag control, and tire air-pressure management.

For example, a component 1003 may be an instrument cluster. For example, the instrument cluster may refer to a panel positioned in front of a driver's seat in a dashboard. For example, the instrument cluster may be configured to display information necessary for driving to the driver (or a passenger). For example, the instrument cluster may be used to display at least one of visual elements for indicating revolutions per minute (RPM) or rotations per minute of an engine, visual elements for indicating the speed of the vehicle 1000, visual elements for indicating a remaining fuel amount, visual elements for indicating a state of a transmission gear, or visual elements for indicating information obtained through the element 1001.

For example, a component 1004 may be a telematics device. For example, the telematics device may refer to an apparatus that combines wireless communication technology and global positioning system (GPS) technology to provide various mobile communication services, such as location information, safe driving or the like in the vehicle 1000. For example, the telematics device may be used to connect the vehicle 1000 with the driver, a cloud (e.g., the security cloud 1006), and/or a surrounding environment. For example, the telematics device may be configured to support a high bandwidth and a low latency, for a 5G NR standard technology (e.g., a V2X technology of 5G NR or a non-terrestrial network (NTN) technology of 5G NR). For example, the telematics device may be configured to support an autonomous driving of the vehicle 1000.

For example, the gateway 1005 may be used to connect the in-vehicle network within the vehicle 1000 with the software management cloud 1009 and the security cloud 1006, which are out-of-vehicle networks. For example, the software management cloud 1009 may be used to update or manage at least one software required for driving and managing of the vehicle 1000. For example, the software management cloud 1009 may be associated with the in-car security software 1010 installed in the vehicle. For example, the in-car security software 1010 may be used to provide a security function in the vehicle 1000. For example, the in-car security software 1010 may encrypt data transmitted and received via the in-vehicle network, using an encryption key obtained from an external authorized server for encryption of the in-vehicle network. In various embodiments, the encryption key used by the in-car security software 1010 may be generated based on the vehicle identification information (vehicle license plate, vehicle identification number (VIN)) or information uniquely assigned to each user (e.g., user identification information).

In various embodiments, the gateway 1005 may transmit data encrypted by the in-car security software 1010 based on the encryption key, to the software management cloud 1009 and/or the security cloud 1006. The software management cloud 1009 and/or the security cloud 1006 may use a decryption key capable of decrypting the data encrypted by the encryption key of the in-car security software 1010 to identify from which vehicle or user the data has been received. For example, since the decryption key is a unique key corresponding to the encryption key, the software management cloud 1009 and/or the security cloud 1006 may identify a sending entity (e.g., the vehicle or the user) of the data based on the data decrypted using the decryption key.

For example, the gateway 1005 may be configured to support the in-car security software 1010 and may be related to the control device 2100. For example, the gateway 1005 may be related to the control device 900 to support a connection between the client device 1007 connected to the security cloud 1006 and the control device 900. As another example, the gateway 1005 may be related to the control device 900 to support a connection between a third party cloud 1008 connected to the security cloud 1006 and the control device 900. However, the disclosure is not limited thereto.

In various embodiments, the gateway 1005 may be used to connect the vehicle 1000 to the software management cloud 1009 for managing the operating software of the vehicle 1000. For example, the software management cloud 1009 may monitor whether update of the operating software of the vehicle 1000 is required, and may provide data for updating the operating software of the vehicle 1000 through the gateway 1005, based on monitoring that the update of the operating software of the vehicle 1000 is required. As another example, the software management cloud 1009 may receive a user request to update the operating software of the vehicle 1000 from the vehicle 1000 via the gateway 1005 and provide data for updating the operating software of the vehicle 1000 based on the received user request. However, the disclosure is not limited thereto.

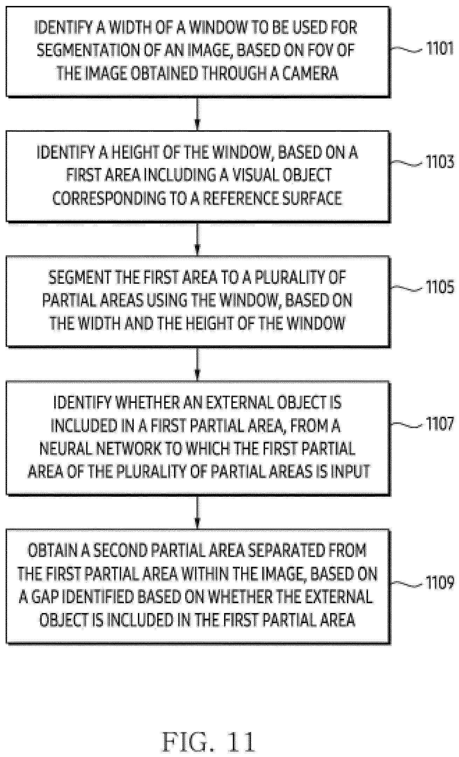

FIG. 11 illustrates an example of a flowchart of an operation of an electronic device according to an embodiment. The electronic device of FIG. 11 may include the electronic device 101 of FIGS. 1, 2, 3A, 3B, 4A, 4B, 4C, 5A, 5B, 5C, 5D, 6A, 6B, and/or 6C. The electronic device of FIG. 11 may include the autonomous driving system 700 of FIG. 7. The electronic device of FIG. 11 may include the control device 900 of FIG. 8 and/or FIG. 9. The operations of FIG. 11 may be performed by the processor 120 of FIG. 1.

Referring to FIG. 11, in operation 1101, the electronic device according to an embodiment may obtain an image through a camera (e.g., the camera 140 of FIG. 1). The electronic device may identify a width of a window to be used for segmentation of the image, based on an FOV of the image obtained through the camera and/or an FOV of the camera.

In operation 1103, the electronic device according to an embodiment may identify a height of the window, based on a first area including a visual object (e.g., the ground) corresponding to a reference surface.

In operation 1105, the electronic device according to an embodiment may segment the first area into a plurality of partial areas using the window, based on the width and the height of the window. For example, the electronic device may segment the first area corresponding to the ground into partial areas having the same size as the window size.

In operation 1107, the electronic device according to an embodiment may identify whether the external object is included in a first partial area, from a neural network to which the first partial area of the plurality of partial areas is input. For example, the electronic device may sequentially input the plurality of partial areas to the neural network. The electronic device may identify whether an external object is included in one of the plurality of partial areas, based on sequentially inputting the plurality of partial areas to the neural network. For example, the electronic device may identify that an external object is included in the first partial area of the plurality of partial areas. The electronic device may obtain a second partial area spaced apart from the first partial area at a designated gap, based on identifying that the external object is included in the first partial area.

In operation 1109, the electronic device according to an embodiment may obtain the second partial area spaced apart from the first partial area in the image, based on the a gap identified based on whether the external object is included in the first partial area. The electronic device may input the second partial area not including the first partial area to the neural network, based on identifying the external object in the first partial area.

As described above, the electronic device according to an embodiment may identify an external object, based on a partial area of an image input to a neural network. For example, the neural network may include the neural network for identifying the external object, using the partial area of the image. The electronic device may identify the external object having a relatively small size by identifying the external object using the neural network. The electronic device may reduce the processor usage by identifying the external object based on the partial area.

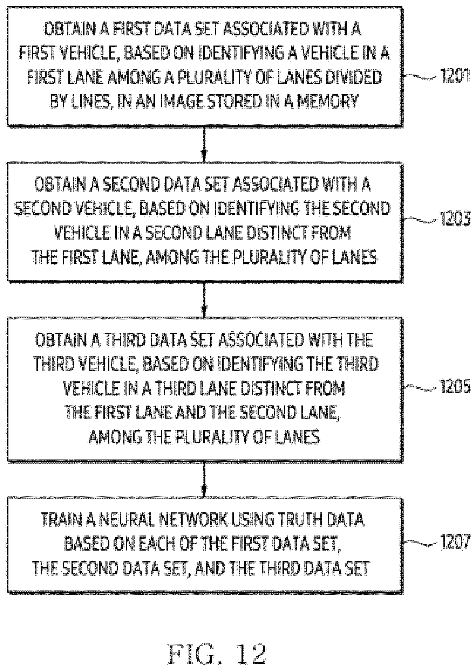

FIG. 12 illustrates an example of a flowchart of an operation of an electronic device according to an embodiment. The electronic device of FIG. 12 may include the electronic device 101 of FIGS. 1, 2, 3A, 3B, 4A, 4B, 4C, 5A, 5B, 5C, 5D, 6A, 6B, and/or 6C, and/or the electronic device of FIG. 11. The electronic device of FIG. 12 may include the autonomous driving system 700 of FIG. 7. The electronic device of FIG. 12 may include the control device 900 of FIG. 8 and/or FIG. 9. The operations of FIG. 12 may be performed by the processor 120 of FIG. 1.

Referring to FIG. 12, in operation 1201, the electronic device according to an embodiment may identify an image stored in a memory (e.g., the memory 130 of FIG. 1). The electronic device may obtain a first data set associated with a first vehicle, based on identifying a vehicle in a first lane (e.g., the first lane 251 of FIG. 2) among a plurality of lanes (e.g., a plurality of lanes 250 of FIG. 2) divided by lines (e.g., the lines 230 of FIG. 2), in the image stored in the memory. For example, the first data set associated with the first vehicle may include data related to a license plate of the first vehicle identified in an area identified as the first vehicle.

In operation 1203, the electronic device according to an embodiment may identify a second vehicle in a second lane (e.g., the second lane 252 of FIG. 2) different from the first lane, among the plurality of lanes. The electronic device may obtain a second data set associated with the second vehicle, based on identifying the second vehicle in the second lane. For example, the second data set associated with the second vehicle may include data related to a license plate of the second vehicle identified in an area identified as the second vehicle.

In operation 1205, the electronic device according to an embodiment may identify a third vehicle in a third lane (e.g., the third lane 253 of FIG. 2) different from the first lane and the second lane, among the plurality of lanes. For example, the electronic device may obtain a third data set associated with the third vehicle, based on identifying the third vehicle in the third lane. For example, the third data set associated with the third vehicle may include data related to a license plate of the third vehicle identified in an area identified as the third vehicle.

In operation 1207, the electronic device according to an embodiment may train the neural network using truth data based on each of the first data set, the second data set, and the third data set. The electronic device may train the neural network, based on data sets associated with the vehicle identified in different lanes. For example, the data sets may include data related to a lane in which a vehicle is identified among a plurality of lanes, and/or a license plate included in the vehicle.

As described above, the electronic device according to an embodiment may identify vehicles in a plurality of lanes. The electronic device may obtain data sets associated with each of the vehicles identified in each of the plurality of lanes. The electronic device may train the neural network based on the data sets. The electronic device may obtain a neural network for identifying an external object included in partial areas in an image, by training the neural network based on the data sets.

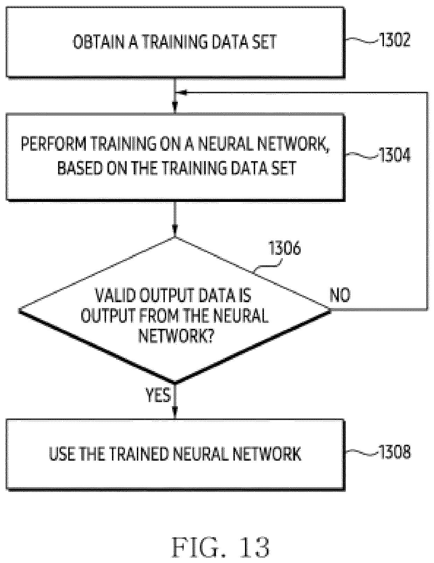

FIG. 13 is a diagram for describing an operation of the electronic device 101 for training a neural network based on a training data set, according to an embodiment. The operation described with reference to FIG. 13 may be performed by the electronic device of FIGS. 1 to 12.

Referring to FIG. 13, in operation 1302, the electronic device according to an embodiment may obtain a training data set. The electronic device may obtain a training data set for supervised learning. The training data may include a pair of input data and ground truth data corresponding to the input data. The ground truth data may represent output data to be obtained from a neural network that receives input data that is a pair of the ground truth data. The ground truth data may be obtained by the electronic device described with reference to FIGS. 1 to 12.

For example, when a neural network is trained to recognize an image, the training data may include an image and information about one or more subjects included in the image. The information may include a classification (e.g., category or class) of a subject that can be identified through an image. The information may include a position, a width, a height, and/or a size of a visual object corresponding to the subject in the image. The training data set identified through the operation 1302 may include pairs of a plurality of training data. In the example of training a neural network for recognition of an image, the training data set identified by the electronic device may include a plurality of images and ground truth data corresponding to each of the plurality of images.

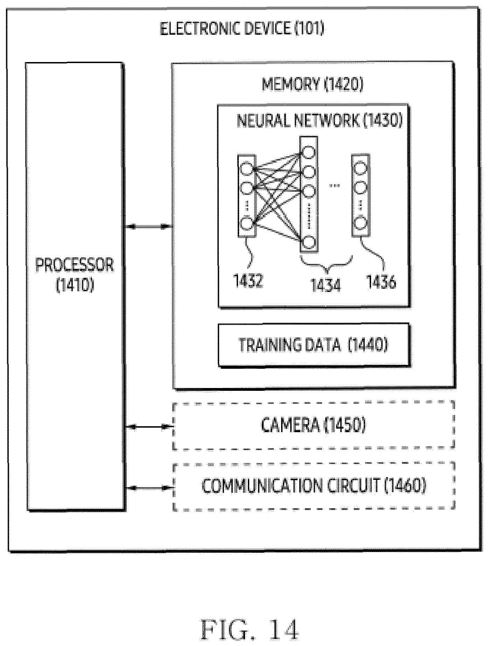

Referring to FIG. 13, in operation 1304, the electronic device according to an embodiment may perform training on the neural network, based on the training data set. In an embodiment in which the neural network is trained based on supervised learning, the electronic device may input the input data included in the training data into an input layer of the neural network. An example of the neural network including the input layer will be described with reference to FIG. 14. The electronic device may obtain the output data of the neural network corresponding to the input data, from an output layer of the neural network receiving the input data through an input layer.

In an embodiment, the training of operation 1304 may be performed based on a difference between the output data and the ground truth data included in the training data and corresponding to the input data. For example, the electronic device may adjust one or more parameters (e.g., a weight to be described later with reference to FIG. 14) related to the neural network such that the difference is reduced, based on a gradient descent algorithm. The operation of the electronic device for adjusting the one or more parameters may be referred to as tuning of a neural network. The electronic device may perform tuning of the neural network based on the output data, using a function defined to evaluate performance of the neural network, such as a cost function. The above difference between the output data and the ground truth data may be included as an example of the cost function.

Referring to FIG. 13, in operation 1306, the electronic device according to an embodiment may identify whether valid output data is output from the neural network trained by operation 1304. When the output data is valid, it may mean that the difference (or the cost function) between the output data and the ground truth data satisfies a condition established for using the neural network. For example, when the average value and/or the maximum value of the difference between the output data and the ground truth data is less than or equal to a designated threshold value, the electronic device may determine that valid output data is output from the neural network.

In case that valid output data is not output from the neural network (NO in operation 1306), the electronic device may repeatedly perform training of the neural network based on the operation 1304. Embodiments of the disclosure are not limited thereto, and the electronic device may repeatedly perform the operations 1302 and 1304.

In a state of obtaining the valid output data from the neural network (YES in 1306), the electronic device according to an embodiment may use the trained neural network, based on operation 1308. For example, the electronic device may input, to the neural network, other input data distinguished from the input data input to the neural network as training data. The electronic device may use the output data obtained from the neural network receiving the other input data, as a result of performing inference on the other input data, based on the neural network.

FIG. 14 is a block diagram of an electronic device 101 according to an embodiment. The electronic device 101 of FIG. 14 may include the electronic device of FIGS. 1 to 13. For example, the operation described with reference to FIG. 13 may be performed by the electronic device 101 of FIG. 14 and/or the processor 1410 of FIG. 14.

Referring to FIG. 14, a processor 1410 of the electronic device 101 may perform computations related to a neural network 1430 stored in a memory 1420. The processor 1410 may include at least one of a central processing unit (CPU), a graphic processing unit (GPU), or a neural processing unit (NPU). The NPU may be implemented as a chip separated from the CPU, or may be integrated into the same chip as the CPU in the form of a system on a chip (SoC). The NPU integrated in the CPU may be referred to as a neural core and/or an artificial intelligence (AI) accelerator.

Referring to FIG. 14, the processor 1410 may identify the neural network 1430 stored in the memory 1420. The neural network 1430 may include a combination of an input layer 1432, one or more hidden layers 1434 (or intermediate layers), and an output layer 1436. The above-described layers (e.g., the input layer 1432, the one or more hidden layers 1434, and the output layer 1436) may include a plurality of nodes. The number of hidden layers 1434 may vary depending on embodiments, and the neural network 1430 including the plurality of hidden layers 1434 may be referred to as a deep neural network. The operation of training the deep neural network may be referred to as deep learning.

In an embodiment, when the neural network 1430 has a structure of a feed forward neural network, a first node included in a particular layer may be connected to all of second nodes included in another layer prior to that particular layer. In the memory 1420, the parameters stored for the neural network 1430 may include weights assigned to connections between the second nodes and the first node. In the neural network 1430 having the structure of the feedforward neural network, a value of the first node may correspond to a weighted sum of values allocated to the second nodes, based on weights allocated to connections connecting the second nodes and the first node.

In an embodiment of the disclosure, when the neural network 1430 has a structure of a convolutional neural network, a first node included in a particular layer may correspond to a weighted sum of some of second nodes included in another layer prior to that particular layer. Some of the second nodes corresponding to the first node may be identified by a filter corresponding to that particular layer. In the memory 1420, the parameters stored for the neural network 1430 may include weights indicating the filter. The filter may include, among the second nodes, one or more nodes to be used to calculate a weighted sum of the first node, and the weights respectively corresponding to the one or more nodes.

According to an embodiment, the processor 1410 of the electronic device 101 may perform training on the neural network 1430, using a training data set 1440 stored in the memory 1420. Based on the training data set 1440, the processor 1410 may perform the operation described with reference to FIG. 13 to adjust one or more parameters stored in the memory 1420 for the neural network 1430.

According to an embodiment, the processor 1410 of the electronic device 101 may perform object detection, object recognition, and/or object classification, using the neural network 1430 trained based on the training data set 1440. The processor 1410 may input an image (or video) obtained through the camera 1450 to the input layer 1432 of the neural network 1430. Based on the input layer 1432 to which the image is input, the processor 1410 may sequentially obtain values of nodes of the layers included in the neural network 1430 to obtain a set (e.g., output data) of values of nodes of the output layer 1436. The output data may be used with a result of inferring information included in the image using the neural network 1430. Embodiments of the disclosure are not limited thereto, and the processor 1410 may input, to the neural network 1430, an image (or video) obtained from an external electronic device connected to the electronic device 101 through the communication circuit 1460.

In an embodiment, the neural network 1430 trained to process an image may be used to identify an area corresponding to a subject in the image (e.g., object detection) and/or identify a class of the subject represented in the image (e.g., object recognition and/or object classification). For example, the electronic device 101 may use the neural network 1430 to segment the area corresponding to the subject in the image, based on a rectangular shape such as a bounding box,. For example, the electronic device 101 may use the neural network 1430 to identify at least one class that matches the subject from among a plurality of specified classes.

As described above, according to an embodiment, an electronic device may include a camera and a processor. The processor may, based on a field-of-view (FoV) of an image obtained through the camera, identify a width of a window to be used to segment the image, identify a height of the window based on a first area including a visual object corresponding to a reference surface, segment the first area to a plurality of partial areas, using the window, based on the width and the height, identify, from a neural network to which a first partial area among the plurality of partial areas is inputted, whether an external object is included in the first partial area, and based on a gap identified based on whether the external object is included in the first partial area, obtain a second partial area separated from the first partial area within the image.

According to an embodiment, the processor may identify distortion of the image by the camera, the image being a first image, and identify the external object based on a second image in which the distortion is compensated, the second image being different from the first image.

According to an embodiment, the processor may at least partially overlap the plurality of partial areas based on a first ratio of the width.

According to an embodiment, the electronic device may further comprise a sensor. The processor may identify, based on the sensor, a first speed of the electronic device which is smaller than a first reference speed, and based on the identification of the first speed, overlap the plurality of partial areas within the first partial area including an edge of the image based on a second ratio smaller than the first ratio.

According to an embodiment, the electronic device may further comprise a sensor. The processor may identify, based on the sensor, a second speed of the electronic device which is greater than a second reference speed, and may, based on identification of the second speed, overlap the plurality of partial areas within the second partial area different from the first partial area including an edge of the image, based on a second ratio smaller than the first ratio.

According to an embodiment, the electronic device may further comprise a speaker. The processor may, based on identifying the external object, output an audio signal indicating that the external object is identified.

According to an embodiment, the electronic device may further comprise a display. The processor may, based on identifying the external object, display a visual object corresponding to the external object.

According to an embodiment, the electronic device may further comprise a sensor. The processor may identify a direction in which the camera identified using the sensor faces and, based on identifying the direction included in a preset range, identify the height.

According to an embodiment, the height may include a first height. The processor may identify a second height of a second area, and based on identifying a difference between the second height and the first height, adjust sizes of the plurality of partial areas capturing portions of the image.

According to an embodiment, the processor may, based on identifying the first height smaller than the second height, identify the first partial area including a vertex of the second area, and identify the second partial area having a size identical to the first partial area and partially overlapping the first partial area.

As described above, an electronic device may comprise memory and a processor. The processor may, based on identifying a first vehicle in a first lane among a plurality of lanes which are distinguished by lines within an image stored in the memory, obtain a first dataset associated with the first vehicle, based on identifying a second vehicle in a second lane different from the first lane among the plurality of lanes, obtain a second dataset associated with the second vehicle, based on identifying a third vehicle in a third lane different from the first lane and the second lane among the plurality of lanes, obtain a third dataset associated with the third vehicle, and train a neural network using truth data based on each of the first dataset, the second dataset, and the third dataset.

According to an embodiment, the neural network may be trained by using shapes of vehicles identified from each of the first dataset, the second dataset, and the third dataset.

According to an embodiment, the neural network may be trained by using a license plate within a first bounding box including one or more texts included in the first bounding box identified as the first vehicle.

According to an embodiment, the neural network may be trained by using labeling with respect to one or more texts included in the second area.

As described above, a method of an electronic device may comprise, based on a field-of-view (FoV) of an image obtained through a camera, identifying a width of a window to be used to segment the image, identifying a height of the window based on a first area including a visual object corresponding to a reference surface, segmenting the first area to a plurality of partial areas, using the window, based on the width and the height, identifying, from a neural network to which a first partial area among the plurality of partial areas is inputted, whether an external object is included in the first partial area, and based on a gap identified based on whether the external object is included in the first partial area, obtaining a second partial area separated from the first partial area within the image.

According to an embodiment, the method may further comprise identifying distortion of the image by the camera, the image being a first image, and identifying the external object based on a second image in which the distortion is compensated, the second image being different from the first image.

According to an embodiment, the method may further comprise at least partially overlapping the plurality of partial areas based on a first ratio of the width.

According to an embodiment, the method may further comprise identifying, based on a sensor, a first speed of the electronic device which is smaller than a first reference speed, and based on the identification of the first speed, overlapping the plurality of partial areas within the first partial area including an edge of the image, based on a second ratio smaller than the first ratio.

According to an embodiment, the method may further comprise identifying, based on a sensor, a second speed of the electronic device, which is greater than a second reference speed, and based on identification of the second speed, overlapping the plurality of partial areas within the second partial area different from the first partial area including an edge of the image, based on a second ratio smaller than the first ratio.

According to an embodiment, the method may further comprise, based on identifying the external object, outputting an audio signal indicating that the external object is identified.

**Claims**

1. An electronic device comprising:

   a camera; and
   a processor, wherein the processor is configured to:

   based on a field-of-view (FoV) of an image obtained through the camera, identify a width of a window to be used to segment the image;
   identify a height of the window based on a first area including a visual object corresponding to a reference surface;
   segment the first area to a plurality of partial areas, using the window, based on the width and the height;
   identify, from a neural network to which a first partial area among the plurality of partial areas is inputted, whether an external object is included in the first partial area; and
   based on a gap identified based on whether the external object is included in the first partial area, obtain a second partial area separated from the first partial area within the image.

2. The electronic device of claim 1, wherein the processor is configured to:

   identify distortion of the image by the camera, the image being a first image; and
identify the external object based on a second image in which the distortion is compensated, the second image being different from the first image.

3. The electronic device of claim 1, wherein the processor is configured to:
   at least partially overlap the plurality of partial areas based on a first ratio of the width.

4. The electronic device of claim 3, further comprising a sensor,
   and wherein the processor is configured to:

   identify, based on the sensor, a first speed of the electronic device which is smaller than a first reference speed; and
   based on the identification of the first speed, overlap the plurality of partial areas within the first partial area including an edge of the image based on a second ratio smaller than the first ratio.

5. The electronic device of claim 3, further comprising a sensor,
   and wherein the processor is configured to:

   identify, based on the sensor, a second speed of the electronic device which is greater than a second reference speed; and
   based on identification of the second speed, overlap the plurality of partial areas within the second partial area different from the first partial area including an edge of the image, based on a second ratio smaller than the first ratio.

6. The electronic device of claim 1, further comprising a speaker,
   and wherein the processor is configured to:
   based on identifying the external object, output an audio signal indicating that the external object is identified.

7. The electronic device of claim 1, further comprising a display,
   and wherein the processor is configured to:
   based on identifying the external object, display a visual object corresponding to the external object.

8. The electronic device of claim 1, further comprising a sensor,
   and wherein the processor is configured to:

   identify a direction to which the camera is directed that is identified using the sensor; and
   based on identifying the direction included in a preset range, identify the height.

**9.** The electronic device of claim 1, wherein the height is a first height,
and wherein the processor is configured to:

identify a second height of a second area;
based on identifying a difference between the second height and the first height, adjust sizes of the plurality of partial areas capturing portions of the image.

**10.** The electronic device of claim 9, wherein the processor is configured to:

based on identifying the first height smaller than the second height, identify the first partial area including a vertex of the second area; and
identify the second partial area, which has a size identical to the first partial area, and partially overlaps the first partial area.

**11.** A method of an electronic device, comprising:

based on a field-of-view (FoV) of an image obtained through a camera, identifying a width of a window to be used to segment the image;
identifying a height of the window based on a first area including a visual object corresponding to a reference surface;
segmenting a plurality of partial areas within the image which are overlapped to each other, based on the width and the height;
identifying, from a neural network to which a first partial area among the plurality of partial areas is inputted, whether an external object is included in the first partial area;
based on a gap identified based on whether the external object is included in the first partial area, obtaining a second partial area separated from the first partial area within the image.

**12.** The method of claim 11, further comprising:

identifying distortion of the image by the camera, the image being a first image; and
identifying the external object based on a second image in which the distortion is compensated, the second image being different from the first image.

**13.** The method of claim 11, further comprising:
at least partially overlapping the plurality of partial areas based on a first ratio of the width.

**14.** The method of claim 13, further comprising:

identifying, based on a sensor, a first speed of the electronic device which is smaller than a first reference speed; and

based on the identification of the first speed, overlapping the plurality of partial areas within the first partial area including an edge of the image, based on a second ratio smaller than the first ratio.

**15.** The method of claim 13, further comprising:

identifying, based on a sensor, a second speed of the electronic device which is greater than a second reference speed; and
based on identification of the second speed, overlapping the plurality of partial areas within the second partial area different from the first partial area including an edge of the image, based on a second ratio smaller than the first ratio.

ELECTRONIC DEVICE (101)

110

PROCESSOR (120)

MEMORY (130)

CAMERA (140)

SENSOR (150)

DISPLAY (160)

SPEAKER (170)

FIG. 1

FIG. 2

FIG. 3A

FIG. 3B

FIG. 4A

FIG. 4B

FIG. 4C

EP 4 456 018 A1

FIG. 5A

32

FIG. 5B

FIG. 5C

FIG. 5D

FIG. 6A

FIG. 6B

FIG. 6C

700

| | |
|---|---|
| SENSOR(S) (703) | |
| IMAGE PREPROCESSOR (705) | VEHICLE CONTROL MODULE (711) |
| DEEP LEARNING NETWORK (707) | NETWORK INTERFACE (713) |
| AI PROCESSOR (709) | COMMUNICATION UNIT (715) |

FIG. 7

FIG. 8

900

CONTROL DEVICE

930c

TRANSMITTER — 930a

932a

932b

922

MEMORY

922a — INSTRUCTIONS

922b — DATA

RECEIVER

930b

DSP — 970

COMMUNICATION
INTERFACE — 980

990

PROCESSOR — 924

INSTRUCTIONS — 924a

DATA — 924b

FIG. 9

FIG. 10

IDENTIFY A WIDTH OF A WINDOW TO BE USED FOR SEGMENTATION OF AN IMAGE, BASED ON FOV OF THE IMAGE OBTAINED THROUGH A CAMERA — 1101

IDENTIFY A HEIGHT OF THE WINDOW, BASED ON A FIRST AREA INCLUDING A VISUAL OBJECT CORRESPONDING TO A REFERENCE SURFACE — 1103

SEGMENT THE FIRST AREA TO A PLURALITY OF PARTIAL AREAS USING THE WINDOW, BASED ON THE WIDTH AND THE HEIGHT OF THE WINDOW — 1105

IDENTIFY WHETHER AN EXTERNAL OBJECT IS INCLUDED IN A FIRST PARTIAL AREA, FROM A NEURAL NETWORK TO WHICH THE FIRST PARTIAL AREA OF THE PLURALITY OF PARTIAL AREAS IS INPUT — 1107

OBTAIN A SECOND PARTIAL AREA SEPARATED FROM THE FIRST PARTIAL AREA WITHIN THE IMAGE, BASED ON A GAP IDENTIFIED BASED ON WHETHER THE EXTERNAL OBJECT IS INCLUDED IN THE FIRST PARTIAL AREA — 1109

FIG. 11

OBTAIN A FIRST DATA SET ASSOCIATED WITH A FIRST VEHICLE, BASED ON IDENTIFYING A VEHICLE IN A FIRST LANE AMONG A PLURALITY OF LANES DIVIDED BY LINES, IN AN IMAGE STORED IN A MEMORY ~ 1201

OBTAIN A SECOND DATA SET ASSOCIATED WITH A SECOND VEHICLE, BASED ON IDENTIFYING THE SECOND VEHICLE IN A SECOND LANE DISTINCT FROM THE FIRST LANE, AMONG THE PLURALITY OF LANES ~ 1203

OBTAIN A THIRD DATA SET ASSOCIATED WITH THE THIRD VEHICLE, BASED ON IDENTIFYING THE THIRD VEHICLE IN A THIRD LANE DISTINCT FROM THE FIRST LANE AND THE SECOND LANE, AMONG THE PLURALITY OF LANES ~ 1205

TRAIN A NEURAL NETWORK USING TRUTH DATA BASED ON EACH OF THE FIRST DATA SET, THE SECOND DATA SET, AND THE THIRD DATA SET ~ 1207

FIG. 12

FIG. 13

FIG. 14

Europäisches
Patentamt

European
Patent Office

Office européen
des brevets

# EUROPEAN SEARCH REPORT

**Application Number**

EP 24 17 2421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 909 270 A (BLACK SESAME INTELLIGENT TECH CO LTD) 4 April 2023 (2023-04-04) * paragraphs [0015], [0033] - [0040], [0047] - [0050], [0054], [0060] - [0061], [0066], [0068] - [0071], [0093] - [0094], [0108] * | 1-15 | INV. G06V20/58 G06V10/25 G06V10/82 |
| A | US 2015/058579 A1 (XU LEI [US] ET AL) 26 February 2015 (2015-02-26) * paragraphs [0037], [0048], [0084] * | 1-15 | |
| A | KR 2023 0001620 A (FS SOLUTION [KR]) 5 January 2023 (2023-01-05) * paragraphs [0044] - [0053], [0065], [0071] * | 1-15 | |
| A | CN 115 187 940 A (ZHONGQI CHUANGZHI TECHNOLOGY CO LTD) 14 October 2022 (2022-10-14) * paragraphs [0080] - [0082] * | 1-15 | TECHNICAL FIELDS SEARCHED (IPC) |
| A | YU-CHUN CHEN ET AL: "Efficient vehicle detection with adaptive scan based on perspective geometry", 2013 IEEE INTERNATIONAL CONFERENCE ON IMAGE PROCESSING, IEEE, 15 September 2013 (2013-09-15), pages 3321-3325, XP032966290, * section 2 * | 1-15 | G06V |

The present search report has been drawn up for all claims

| Place of search | Date of completion of the search | Examiner |
|---|---|---|
| The Hague | 13 September 2024 | Bouganis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 17 2421

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | | Publication date | Patent family member(s) | | Publication date |
|---|---|---|---|---|---|
| CN 115909270 | A | 04-04-2023 | CN | 115909270 A | 04-04-2023 |
| | | | US | 2024153280 A1 | 09-05-2024 |
| US 2015058579 | A1 | 26-02-2015 | US | 2015058579 A1 | 26-02-2015 |
| | | | WO | 2015031350 A1 | 05-03-2015 |
| KR 20230001620 | A | 05-01-2023 | KR | 20230001620 A | 05-01-2023 |
| | | | KR | 20230140445 A | 06-10-2023 |
| CN 115187940 | A | 14-10-2022 | NONE | | |

EPO FORM P0459

For more details about this annex : see Official Journal of the European Patent Office, No. 12/82